(19) Europäisches Patentamt

European Patent Office

Office européen des brevets

(11) **EP 1 729 459 A1**

(12) **DEMANDE DE BREVET EUROPEEN**

(43) Date de publication:
06.12.2006 Bulletin 2006/49

(51) Int Cl.:
*H04L 12/56* (2006.01)

(21) Numéro de dépôt: 05291181.5

(22) Date de dépôt: 01.06.2005

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(71) Demandeur: **Citeservice**
**75019 Paris (FR)**

(72) Inventeur: **Coquin, Ronan**
**63520 Saint Jean des Olliers (FR)**

(74) Mandataire: **Pontet, Bernard et al**
**Pontet Allano & Associés s.e.l.a.r.l.**
**25 rue Jean-Rostand**
**Parc Club Orsay Université**
**91893 Orsay Cédex (FR)**

(54) **Procédé et système de diffusion multimédia interactive dans un ensemble de locaux, notamment une structure hôtelière, procédé d'optimisation associé et lecteurs multimédia équipant ce système**

(57) Procédé de diffusion multimédia interactive dans un ensemble de locaux équipés chacun d'un lecteur multimédia (LMi), comprenant une diffusion de contenus multimédia à partir d'un serveur de diffusion (SD) vers les lecteurs multimédia (LMi) via un réseau de communication sans fil comprenant un point d'accès principal relié au serveur de diffusion (SD) et des moyens de réception sans fil équipant chaque lecteur multimédia (LMi).

Ce procédé comprend un processus initial pour rechercher des routes optimales entre le serveur de diffusion (SD) et les lecteurs multimédia (LMi), ces routes optimales étant ensuite utilisées en phase d'exploitation dans un mode de routage statique. Le réseau de communication peut avantageusement être un réseau Wi-Fi aux standards 802.11b, 802.11g et 802.11a.

FIG.1

EP 1 729 459 A1

**Description**

La présente invention concerne un procédé de diffusion multimédia interactive dans un ensemble de locaux, notamment une structure hôtelière. Elle vise également un système de diffusion dans lequel ce procédé est mis en oeuvre, ainsi que des lecteurs multimédia équipant un tel système.

Le domaine de l'invention est celui des réseaux locaux équipant un ensemble de locaux, tels que des hôtels, des résidences, des centres hospitaliers ou de détention, et plus particulièrement des réseaux sans fils, notamment des réseaux de type Wi-Fi, selon le standard IEEE 802.11b+. Les locaux concernés sont généralement équipés de lecteurs multimédias reliés via un réseau sans fil à un serveur.

Il existe actuellement des installations de diffusion multimédia pour des ensembles de locaux équipés chacun d'un lecteur multimédia, mais ces installations posent des problèmes de capacité de diffusion et de déploiement.

En particulier, des lecteurs multimédia sans fil sont généralement placés dans chaque chambre d'un hôtel une fois pour toute et ils ne sont pas mobiles. Par ailleurs, la taille et la disposition des hôtels sont généralement variables on ne peut donc prédire à l'avance quelle implantation va être retenue. De plus, pour des hôtels présentant un grand nombre d'étages, un point d'accès Wi-Fi (Access Point) placé à la réception ne peut suffire, le signal étant trop atténué dans les étages supérieurs.

Un premier objectif de l'invention est de proposer un procédé de diffusion multimédia sans fil qui puisse être mis en oeuvre dans un immeuble de façon plus rapide et plus rationnelle que les systèmes actuels.

Ce premier objectif est atteint avec un procédé de diffusion multimédia interactive dans un ensemble de locaux équipés chacun d'un lecteur multimédia, comprenant une diffusion de contenus multimédia à partir d'un serveur de diffusion vers les lecteurs multimédia via un réseau de communication sans fil comprenant un point d'accès principal relié au serveur de diffusion et des moyens de réception sans fil équipant chaque lecteur multimédia, caractérisé en ce qu'il comprend un processus initial pour rechercher des routes optimales entre le serveur de diffusion et les lecteurs multimédia, ces routes optimales étant ensuite utilisées en phase d'exploitation dans un mode de routage statique.

Ainsi, le processus initial d'optimisation effectué lors de l'installation du système de diffusion met en oeuvre des opérations de routage dynamique, tandis qu'en exploitation, le routage est de type statique, ce qui contribue à améliorer sensiblement la réactivité et la rapidité de diffusion des contenus multimédia vers les lecteurs Clients.

Le processus initial de recherche de routes optimales peut avantageusement comprendre une modélisation du réseau par la théorie des graphes, dans laquelle chaque lecteur multimédia constitue un noeud « Client » d'un graphe dont les arêtes sont représentées par les débits entre les noeuds.

Le processus de recherche de route comprend par exemple les étapes suivantes :

1) un choix arbitraire d'une solution envisagée constituée d'un ensemble de routes qui n'ont pas encore été choisies,
2) un test pour déterminer si le serveur de diffusion accède effectivement à tous les noeuds,
3) si ce test est satisfaisant, une mémorisation de la solution choisie sous la forme d'un ensemble de tables de routage, et dans le cas contraire, un retour à la première étape.

Le procédé de diffusion selon l'invention peut en outre comprendre un processus pour déterminer une solution étendue envisagée sur la base d'un nombre de lecteurs multimédia disponibles dans ladite solution (S) supérieur au nombre de lecteurs multimédia effectivement utilisés au sein d'un sous-réseau (R), la différence entre le nombre de lecteurs de la solution (S) et le nombre de lecteurs dudit sous-réseau (R) réseau représentant un nombre (Xcard) de lecteurs à exclure.

Le procédé de diffusion selon l'invention peut en outre comprendre une étape (4) pour déterminer un nombre maximal ($n_{max}$) de contenus multimédia, notamment de films, diffusables simultanément sur une partie du réseau dont un nombre (Xcard) de lecteurs multimédia sont exclus, puis une étape (5) pour déterminer parmi l'ensemble des sous-réseaux possibles, le sous-réseau (R) maximisant le nombre (n) de contenus multimédia diffusables simultanément.

Un second objectif de la présente invention est de proposer un procédé de diffusion prenant en compte des situations de débranchement d'un ou plusieurs lecteurs multimédia, qui ont pour conséquence de perturber jusqu'à interrompre des routes déterminées entre le Serveur de diffusion et les lecteurs Clients.

Ce second objectif est atteint avec un procédé de diffusion comprenant en outre un processus de gestion du débranchement d'un lecteur multimédia « client » initialement relié au réseau de communication sans fil, comprenant :

- une détection dudit lecteur multimédia débranché,
- une élaboration d'une nouvelle route, dite route de secours,
- une mise à jour des routes pour les lecteurs multimédia Clients du Serveur, et
- une propagation de scripts de mise à jour des routes vers lesdits Clients.

Le processus de gestion de débranchement peut être implémenté sous la forme de scripts au nombre desquels un script de surveillance ayant pour fonctions de (i) déterminer la disparition de lecteurs multimédia sur le réseau et de (ii) déterminer la réapparition de lecteurs multimédia sur le réseau.

Les scripts implémentant le processus de gestion de débranchement peuvent comprendre des scripts de suppression de routes erronées à la suite de l'apparition d'un lecteur Client Hors Service et des scripts de création de routes de secours.

Les lecteurs Clients peuvent être pourvus d'un script de surveillance du Serveur, d'un script de recherche d'accès au Serveur, et d'un script de rapatriement de scripts de mise à jour des routes.

Le procédé de diffusion selon l'invention peut aussi assurer un relais de communication entre un lecteur multimédia équipé d'un point d'accès secondaire et un sous-ensemble de lecteurs multimédia dont les moyens de réception sans fil sont sensiblement hors de portée du point d'accès principal. Il comprend alors une détermination de l'emplacement optimal de points d'accès secondaires.

Le procédé de diffusion selon l'invention peut implémenter un premier critère d'optimisation consistant à assurer un débit moyenné sur une durée prédéterminée à un nombre prédéterminé de clients simultanés, et un second critère d'optimisation consistant à minimiser le nombre de points d'accès secondaires à installer.

Il devient ainsi possible de résoudre le problème de la diffusion, à partir d'un point d'accès principal relié à un serveur, de contenus multimédia à l'ensemble des chambres d'un hôtel, tout particulièrement celles situées dans des étages supérieurs.

Il s'agit ensuite de déterminer combien de points d'accès supplémentaires doivent être installés et dans quelles chambres seront placés ces points d'accès supplémentaires, de manière optimale. Un bon fonctionnement du système de diffusion multimédia selon l'invention implique d'assurer une contrainte de débit. Par exemple si on souhaite un débit de D Mb/s pour une application et ce pour N chambres d'un hôtel simultanément ; il est nécessaire d'assurer un débit possible minimum de N*D Mb/s dans toutes les chambres.

Suivant un autre aspect de l'invention, il est proposé un système de diffusion multimédia interactive comprenant :

- une pluralité de lecteurs multimédia disposés dans des locaux et comprenant des moyens de communication sans fil,
- un serveur de diffusion auxquels lesdits lecteurs multimédia sont reliés via un réseau sans fil,
- un point d'accès relié au serveur et prévu pour communiquer avec les lecteurs multimédia, et
- des moyens pour déterminer des routes optimales entre le serveur de diffusion et les lecteurs multimédia, pour acheminer des contenus multimédia vers chaque lecteur multimédia, ces routes optimales étant ensuite utilisées en phase d'exploitation dans un mode de routage statique.

Le système de diffusion selon l'invention peut en outre comprendre des moyens pour gérer le débranchement d'au moins un lecteur multimédia « Client » initialement relié au réseau de communication sans fil.

Les moyens de gestion de débranchement peuvent avantageusement comprendre :

- des moyens pour détecter un lecteur multimédia débranché,
- des moyens pour élaborer une nouvelle route, dite route de secours,
- des moyens pour mettre à jour des routes pour les lecteurs Clients du Serveur, et
- des moyens pour propager des scripts de mise à jour des routes vers lesdits Clients.

Suivant encore un autre aspect de l'invention, il est proposé un lecteur multimédia prévu pour équiper un local au sein d'une structure pourvue d'un système de diffusion multimédia selon l'invention, comprenant :

- des moyens de réception de contenus multimédia transmis depuis un Serveur de diffusion sur un réseau de communication sans fil, et
- des moyens de connexion avec un équipement pour visualiser les contenus multimédia reçus, et
- des moyens de contrôle et de traitement agencés pour rechercher un accès au Serveur.

Les moyens de contrôle et de traitement peuvent être agencés pour surveiller le Serveur, et pour rapatrier des scripts de mise à jour de routes émis depuis le Serveur de diffusion.

Le lecteur multimédia selon l'invention peut en outre comprendre des moyens d'accès secondaire connectés aux moyens de réception sans fil et agencés pour relayer un signal de contenu multimédia reçu par les moyens de réception sans fil vers un sous-ensemble de lecteurs multimédia dont les moyens de réception sans fil sont sensiblement hors de portée du point d'accès principal associé au serveur de diffusion multimédia.

Il peut aussi comprendre des moyens de stockage d'énergie électrique agencés pour maintenir une fonction de relais de communication sans fil en cas d'arrêt ou défaillance de l'alimentation secteur, et des moyens pour détecter une activation des moyens de stockage d'énergie et transmettre une information de détection à des moyens informatiques distants.

D'autres avantages et caractéristiques de l'invention apparaîtront à l'examen de la description détaillée d'un mode de mise en oeuvre nullement limitatif, et des dessins annexés sur lesquels :

- la figure 1 illustre schématiquement la structure d'un système de diffusion multimédia selon l'invention dans une première variante de réalisation ;
- la figure 2 illustre un exemple de résultat de l'algorithme mis en oeuvre dans le procédé de diffusion multimédia, avec un seuil de 4 Mb/s ;
- la figure 3 illustre un premier mode de démarrage d'un poste client, mis en oeuvre dans le procédé selon l'invention ;
- la figure 4 illustre un second mode de démarrage d'un poste client, mis en oeuvre dans le procédé selon l'invention ;
- la figure 5 illustre le fonctionnement global d'un poste client, dans un système de diffusion multimédia selon l'invention ;
- la figure 6 est un organigramme de la tache de vérification périodique mise en oeuvre dans le procédé de diffusion multimédia selon l'invention ;
- la figure 7 est un tableau de mesures de débit réalisées lors d'une mise en oeuvre du procédé selon l'invention ;
- les figures 8A, 8B et 8C illustrent trois exemples de mesures effectuées sur quatre noeuds, lors de l'exploitation du procédé selon l'invention ;
- la figure 9 illustre schématiquement la structure d'un système de diffusion multimédia selon l'invention dans une seconde variante de réalisation;
- la figure 10 illustre la structure d'un pont filaire mis en oeuvre dans le système selon l'invention ;
- la figure 11 illustre schématiquement la structure d'un lecteur multimédia selon l'invention assurant une fonction de point d'accès secondaire ;
- la figure 12 illustre l'évolution de la puissance reçue du point d'accès principal en fonction de la distance ;
- la figure 13 illustre les flux d'information entre lecteurs multimédia dans un système selon l'invention ;
- la figure 14 illustre la structure interne d'un lecteur multimédia selon l'invention ;
- la figure 15 illustre schématiquement la mise en oeuvre d'un clavier infrarouge et d'un boîtier de télécommande avec un lecteur multimédia selon l'invention ;
- la figure 16 illustre schématiquement le mode d'alimentation d'un lecteur multimédia avec point d'accès secondaire selon l'invention ; et
- la figure 17 illustre un exemple pratique de connexion d'un lecteur multimédia selon l'invention et d'un poste de télévision.

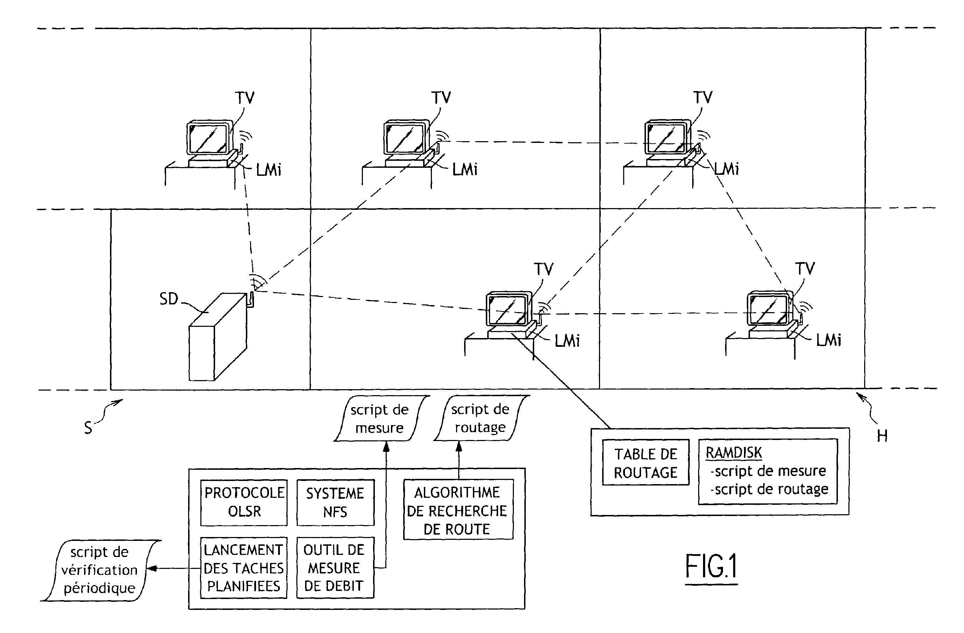

On va maintenant décrire, en référence aux figures 1 à 8C, une première variante de réalisation d'un système de diffusion multimédia interactive selon l'invention, en même temps que le procédé d'optimisation mis en oeuvre pour l'implémentation de ce système.

Le système de diffusion multimédia S selon l'invention, mis en oeuvre dans un hôtel H ou dans tout autre immeuble comportant un ensemble de chambres ou de locaux, comprend :

- un serveur SD de diffusion de contenu multimédia (mail,film,guide ,..) installé dans un local de l'hôtel ou de l'immeuble, et
- une pluralité de lecteurs multimédia LMi équipant chaque chambre et communiquant avec le serveur de l'hôtel par liaison Wi-Fi ou autre liaison radioélectrique, chaque lecteur multimédia étant relié à un poste de télévision ou un moniteur TV de visualisation disposé dans la chambre.

Chaque lecteur équipant une chambre peut servir de relais Wi-Fi pour d'autres lecteurs dans d'autres chambres, ce qui évite l'utilisation de point d'accès (« Access Point »).

Le serveur SV et la pluralité de lecteurs multimédia LM fonctionnant comme des machines ou postes « client » à l'égard de ce serveur, constituent un réseau local sans fil dans lequel des routes vont être établies afin de difFuser de façon optimale les contenus multimédia.

On va ainsi décrire un algorithme de recherche des routes, mis en oeuvre dans le procédé de diffusion selon l'invention. Dans la suite de la description, on entend par « solution », une configuration des routes déterminant un réseau. On entend par « noeud » une machine du réseau. On entend par « serveur » un noeud qui diffuse des filmes et n'y accède jamais. On entend par « Client » un noeud qui accède aux films d'un serveur. On entend par « Graphe » un ensemble de noeuds. On entend par « n-uplet » un objet de la forme $(x1, x2, ..., xn)$ où les $xi$ sont des éléments d'un ensemble parfaitement défini.

L'algorithme de recherche de route mis en oeuvre dans le procédé selon l'invention suit une approche globale de type recherche tabou, recuit simulé ou algorithme génétique. Toutefois, les paramètres stochastiques de ces recherches seront supprimés afin de garantir l'optimum. Ces algorithmes de recherche opérationnel sont couramment utilisés pour la résolution de problèmes non polynomiaux complet, c'est-à-dire, en simplifiant, des problèmes où il est difficile de trouver la solution mais où il est facile de la vérifier.

Le réseau est modélisé par un graphe dont chaque noeud est une machine. Les arrêtes de ce graphe représentent les débits entre les noeuds.

Plutôt que de construire le réseau en parcourant le graphe et en testant localement l'accessibilité d'un noeud, l'algorithme de recherche de route énumère toutes les solutions. Une solution est un graphe dont les routes sont connues.

L'algorithme de recherche comprend les étapes suivantes :

1. Choisir une solution dans l'ensemble des solutions, c'est-à-dire choisir arbitrairement un ensemble de routes qui n'ont pas encore été choisies,
2. vérifier que le graphe est bien un réseau valide, en particulier que le serveur accède à tous les noeuds, et qu'il n'y a pas de boucle,
3. vérifier si la solution est effectivement une solution au problème.

 o Si oui, mémoriser la solution, s'arrêter ou continuer pour en trouver une meilleure
 o Si non, revenir à l'étape 1.

Le nombre maximal de contenus multimédias tels que des films diffusables sur une partie du réseau peut être déterminé à partir des paramètres et variables suivants :

n : le nombre de films diffusés simultanément.
Cette variable détermine le nombre de films diffusables simultanément, quelque soit les machines qui les diffusent. Ce nombre doit être maximisé et il sera le résultat de l'algorithme.
**nmax :** le nombre maximal de films diffusables simultanément.
Ce paramètre permet de restreindre la recherche de l'algorithme. Tel qu'il est envisagé, l'algorithme maximise n en augmentant sa valeur, nmax permet de borner la recherche. Ainsi l'algorithme est raccourci dans le cas où on ne cherche pas à jouer plus de nmax films même si le réseau peut permettre plus.
**d :** le débit nécessaire pour un film.
Ce paramètre est considéré dans le test d'une solution pour vérifier sa validité.
**S :** une solution étendue envisagée.
Cette variable représente une solution potentielle. C'est un ensemble de tables de routages qui déterminent une topologie du réseau. Le but de l'algorithme est de valider ou d'invalider cette solution. Toutefois, S contient trop de machines, la solution est donc potentiellement contenue dans S qui représente donc une solution étendue.
**R :** un sous réseau de S égal à S-X.
Le réseau final ne contiendra pas toutes les machines disponibles. Cette variable représentera le réseau final s'il est validé par l'algorithme. Contrairement à S qui contient toutes les routes, R est un semble de machines (on ne duplique pas l'information des routes). La cardinalité de R est constante.
**Es :** l'ensemble de toutes les solutions étendues envisageables.
La constante Es contient toutes les solutions étendues S de manière exhaustive. L'algorithme explore cet ensemble pour découvrir une solution S qui satisfera les contraintes.
**X :** l'ensemble des machines exclues du réseau.
Toutes les machines du parc ne seront pas mises en réseau. A un S donné, la variable X associe les machines exclues. Le complémentaire de X pour S est R.
**Xcard :** le nombre de machines à exclure.
Ce paramètre est la cardinalité de l'ensemble X. Il est constant pendant toute la durée de l'algorithme.

A l'étape 3 de l'algorithme il faut tester une solution. On cherche ici le nombre de films diffusables simultanément n le plus grand possible sur une partie du réseau dont Xcard machines sont exclues. Il faut donc faire varier d'une part les Xcard machines à exclure et n de 1 à nmax en considérant une solution S.

Pour une solution S considéré, l'algorithme fait varier X et teste chaque solution R.

Pour un ensemble de machines R donné, l'algorithme augmente n pour valider R avec la plus grande valeur de n possible.

A une valeur de n donnée, l'algorithme regroupe les noeuds en n-uplets et vérifie sur chaque noeud du graphe que le film peut être diffusé et/ou transmis. C'est-à-dire que l'algorithme vérifie que le film peut atteindre chacun des clients de R avec un débit d prédéfini. Si tous les ensembles à n noeuds peuvent recevoir un film, alors l'algorithme valide ce R pour n machines et passe à la valeur suivante de n. S'il existe une machine d'un n-uplet qui ne peut pas recevoir de film, alors R, pour cette valeur de n, n'est pas solution. Dans ce cas, si elle existe, l'algorithme compare n-1 avec la précédente meilleure solution. Si n-1 est plus grand, il mémorise les routes de R, X et n-1 (car si l'algorithme teste R à n+1, c'est de R est solution à n) et il modifie pour envisager un nouvel ensemble R en réinitialisant la variable n à 1.

Lorsque l'algorithme a testé tous les ensembles R disponibles d'une solution S, il connaît la meilleure solution R, c'est-à-dire celle qui permet de jouer le nombre n de films simultanément le plus grand. L'algorithme envisage donc une autre solution R. Au terme de cette nouvelle exploration, le meilleur R mémorisé est comparé avec les nouveaux testés et il est remplacé si la valeur de n du nouveau est plus grande.

Après avoir parcouru tout Es et envisagé toutes les solutions, l'algorithme a en mémoire un ensemble de machines R avec un ensemble de routes avec la valeur de n la plus grande possible parmi toutes les configurations possibles du réseau. C'est cette solution qui est restituée au terme de l'algorithme.

Dans un exemple pratique d'écriture de l'algorithme de recherche de route :

```
Pour tout S appartenant a Es
Pour tout R = S-X
Pour tout n <= nmax
Pour tout n-uplet de R
Vérifier R
Si R ok pour n alors tester n+1
Si R n'est pas solution à n, comparer et sauvegarder n-1
et modifier X
```

Tester une solution pour un n-uplet revient à considérer un ensemble de routes et un ensemble de n machines qui réceptionnent un film simultanément, et, pour chaque noeud, à vérifier si les débits disponibles, en entrée et en sortie, permettent de subvenir aux besoins du transfert des films.

Pour chaque noeud, le bilan est effectué comme suit :

- on calcul le débit nécessaire en entrée en multipliant d par le nombre de machines qui doivent recevoir un film derrière ce noeud (lui y compris)
- on divise le résultat de cette multiplication par le débit disponible entre ce noeud et le précédent.
- Pour chaque branche qui part de ce noeud, on calcule le produit d fois le nombre de films à transmettre et on divise ce résultat par le débit de la branche.
- Le noeud est valide si la somme de tous ces rapports est inférieure ou égal à 1.

On va maintenant décrire un processus de gestion du débranchement d'une machine sur le réseau, mis en oeuvre dans le procédé de diffusion selon l'invention. Ce processus de gestion de débranchement comprend les fonctionnalités suivantes :

- détection d'une mahcine hors service parmi des machines débranchées,
- élaboration d'une nouvelle route, dite route de secours,
- génération de scripts de mise à jour des routes pour les clients,
- propagation de scripts de mise à jour des routes.

Le processus de gestion de débranchement est ainsi mis en oeuvre sous la forme d'un logiciel incluant un ensemble de scripts associés à chacune de ces fonctionnalités.

Le script de surveillance du réseau a deux fonctions :

- déterminer la disparition de machines sur le réseau,
- déterminer la réapparition de machines sur le réseau.

Ce script de surveillance maintient dans une variable d'environnement une liste d'adresses IP de machines absentes.

Si la liste change d'une liste vide vers une liste contenant des éléments, un lancement d'un script de détection de la machine hors service est effectué.

Si la liste change d'une liste contenant des éléments vers une liste vide, un lancement de la propagation de scripts de mise à jour des routes (routes de rétablissement) est effectué.

Le script de détection de la machine hors service implémente un algorithme de théorie des graphes développé en langage C++, traitant en entrée la liste des machines débranchées et délivrant en sortie une identification des machines à rebrancher ou un message d'alerte.

Ce script de détection inclut aussi un test d'appartenance du noeud actuel du parcours dans la liste des machines absentes.

Si le noeud du graphe est une machine débranchée, cette machine est mémorisée comme celle hors service dans le cas où c'est la première rencontrée, et le noeud est empilé.

Si la pile contient deux éléments, le noeud est sauvegardé dans une liste de « Seconds », et il est marqué comme étant visité.

Lors du retour de récursion du parcours, le noeud est dépilé. Si la pile est vide et s'il existe des noeuds débranchés qui n'ont pas encore été visités, une alerte est alors déclenchée car plusieurs machines indépendantes sont hors service. Sinon, le résultat est la machine Hors Service, ainsi que la liste des Seconds (machines à rebrancher).

L'élaboration d'une route de secours et la génération des scripts de mise à jour des routes sont réalisées à travers un algorithme de théorie des graphes développé en langage C++ traitant en entrée la machine Hors Service et une liste des Seconds, et délivrant en sortie des scripts de mise à jour des routes.

Cet algorithme a pour fonction de créer deux types de scripts :

- les scripts de suppression des routes erronées à la suite de l'apparition d'une machine Hors Service ;
- les cripts de création des routes de secours pour les machines faisant partie de la liste des seconds et dont les routes dépendent de la machine Hors Service.

Pour la création des routes de secours, l'algorithme recherche les voisions des noeuds à rebrancher et crée une nouvelle arête sur le graphe qui permet de raccorder les seconds à la partie opérationnelle du réseau.

Une fois que la nouvelle route est déterminée, l'algorithme parcourt à nouveau le graphe pour mettre à jour les scripts de routage.

La propagation des scripts de mise à jour des routes est une tâche effectuée au nouveau des Clients. Le serveur met à disposition des Clients les scripts dans un répertoire prédéfini.

Les Clients sont dotés des scripts suivants, développés en « script shell »:

- un script de surveillance du Serveur,
- un script de recherche d'accès au Serveur,
- un script de rapatriement des scripts de mises à jour des routes.

Lorsque le Serveur n'est plus accessible, le Client doit partir à sa recherche avec le script de recherche d'accès au Serveur. Lorsque les routes ne sont pas encore mises à jour, il est impossible pour les Clients de retrouver le Serveur. Lorsque les nouvelles routes sont en place au moins jusqu'à eux, il faut que les Clients se reconnectent au Serveur et récupèrent leur scripts. Pour atteindre le Servuer, qui n'est pas forcément un voisin, le Client doit reconnaître une route pour le joindre. Dans le cas contraire, une erreur du type « no route to host » se déclenche. Mais le Client ne peut pas savoir quel voisin mène au Serveur, car seul ce dernier a cette information. Le Client va donc tester tous ses voisins.

Pour tous les voisins, il est effectué une modification de la table de routage pour changer la passerelle permettant de joindre le Serveur. Si le teste de connexion échoue, le voisin suivant est testé. Le Client trouvera alors une solution dès que les routes seront en place.

Un script de surveillance d'arrivée de scripts de mise à jour des routes, regarde dans un répertoire prédéterminé la présence d'un script de mise à jour de ses routes, lorsque le Client retrouve le Serveur (et périodiquement). Si ce script de mise à jour existe, il est déplacé et exécuté sur le Client.

Dans une version particulière de l'invention, le procédé de diffusion selon l'invention peut aussi utiliser le protocole OLSR pour l'exploration du réseau local et la création de routes temporaires. Des mesures sont effectuées grâce à la propriété connue du protocole OLSR à choisir systématiquement les routes qui minimisent les sauts.

Le procédé d'optimisation du système de diffusion selon l'invention comprend les étapes suivantes :

- un démarrage des lecteurs multimédia avec le protocole OLSR,
- une mise à jour par le protocole OLSR des tables de routage pour que chaque lecteur qui est dans le périmètre des antennes WIFI soit accessible,
- une utilisation du réseau par un script de mesure, pour effectuer des mesures entre tous les lecteurs,
- une interprétation de ce script de mesure par un algorithme prévu pour analyser les débits et qui pour redéfinir les routes afin de garantir que chaque segment entre deux lecteurs multimédia soit au moins supérieur à un seuil de tolérance,
- un choix, parmi les routes tolérables, de celle dont le nombre de saut sera minimal, afin de réduire le temps de parcours de paquets et augmenter la réactivité des commandes, les nouvelles tables de routage prenant en considération la possibilité de se connecter sur le port Ethernet des boîtiers lecteurs afin de relier un lecteur multimédia au réseau,
- une propagation des scripts de mise à jour des tables de routage sur le réseau vers chaque machine,
- un arrêt du protocole OLSR par les lecteurs, un vidage de leur table de routage et un lancement du script.

Si un lecteur disparaît du réseau, les routes statiques ne sont plus valides. Un processus de type « daemon » sur le serveur repasse le réseau en protocole OLSR.

Un script du serveur met à jour la liste des machines opérationnelles du réseau et recalcule les routes, et les lecteurs multimédia basculent de nouveau en mode de routage statique.

Le serveur SD utilise, pour communiquer avec les lecteurs clients, des répertoires et des fichiers partagés sur le système de fichiers de réseau NFS. L'arborescence contenue dans le répertoire /var/cs partagé est la suivante :

- le répertoire /var/cs/mesures/ est le répertoire de destination des mesures des lecteurs clients. Ce répertoire contient des fichiers de la forme IP où IP est l'adresse IP du lecteur ;
- le répertoire /var/cs/routes/ contient les fichiers de configuration des routes générées par l'algorithme de recherche. Ce répertoire contient des fichiers de la forme *IP.conf* où IP est l'adresse IP du lecteur ;
- Le répertoire /var/cs/etc/ contient : le fichier de mesures qui contient 1 si le réseau est en mode de mesure, et qui est vide sinon ; le fichier **olsr** qui contient 1 si le réseau est en mode de routage OLSR, et qui est vide sinon ; le fichier **getconf** qui contient 1 si les machines du réseau doivent télécharger à nouveau leur fichier de configuration des routes, et qui est vide sinon.

De plus, le répertoire /etc/cs/ contient un fichier *reset* si et seulement s'il faut effacer les fichiers de configuration et refaire toutes les mesures du réseau.

On va maintenant décrire la façon dont les mesures peuvent être réalisées dans le procédé de diffusion multimédia selon l'invention. La réalisation des mesures implique trois hypothèses :

  i. tous les lecteurs sont interrogeables,
  ii. tous les lecteurs peuvent identifier leurs voisins,
  iii. tous les lecteurs peuvent répondre à une machine (le serveur) au moins pour fournir leurs résultats.

Afin de répondre à ces exigences, le script de mesure repose sur le protocole OLSR. Ce protocole garantit que si un lecteur est dans le périmètre de couverture du réseau WIFI, alors il sera accessible de partout. Cette propriété du protocole OLSR vérifie donc les hypothèses i et iii.

Le protocole OLSR crée ses routes en fonction du nombre de sauts nécessaires pour atteindre un lecteur. Si le lecteur est voisin, alors la route aura un seul saut. Si le lecteur est accessible avec au moins un intermédiaire, alors la route aura deux sauts, et ainsi de suite. Cette propriété du protocole OLSR permet de vérifier que les lecteurs testés sont bien voisins car les débits mesurés sur des lecteurs distants sont démesurément petits. Cette propriété vérifie l'hypothèse ii.

L'accessibilité des lecteurs est vérifiée lors de la mise en place du réseau. Le protocole OLSR utilise les propriétés Ad-Hoc pour interroger les cartes des lecteurs.

Les mesures peuvent être effectuées avec l'outil NetPerf qui permet de mesurer le débit entre deux noeuds du réseau. On observe expérimentalement que les résultats obtenus sur une route avec des sauts se sont révélés bien inférieurs au minimum des débits rencontrés sur cette route. Cette chute de débit est normale et est une conséquence de l'architecture WiFi. C'est pour cette raison qu'intervient la deuxième hypothèse. Seules les mesures entre deux noeuds voisins seront pris en compte dans l'algorithme.

Le script de mesure écrit dans un fichier qui porte le nom du lecteur multimédia, les résultats des mesures. Ce fichier peut être écrit dans un espace réservé sur le système NFS directement sur le serveur. L'ensemble des fichiers de mesures est lu par l'algorithme d'optimisation afin de déterminer les routes qui garantissent un débit minimal entre les noeuds du réseau.

Si l'on recherche une cartographie des débits la plus juste possible, il est cependant impossible de faire plusieurs mesures simultanées sur un même lecteur. Si l'on estime qu'une mesure dure par exemple 10 secondes, que plusieurs mesures doivent être effectuées pour obtenir une moyenne (avec par exemple un nombre de mesures égal à 5), pour un réseau comprenant 30 lecteurs et dans l'hypothèse qu'un lecteur a en moyenne trois voisins, et si les calculs sont effectués successivement, le temps total des mesures est alors estimé à 10sec x 5mesures x 3voisins x 30machines soit 4500 sec c'est-à-dire une heure et quart.

Afin de réduire ce temps de mesure, toutes les mesures sont lancées en même temps mais un processus de type *« daemon* réseau » bloquera le lecteur si ce lecteur fait ou subit des mesures. Ce *« daemon »* est un processus du serveur qui écoute un port réseau du lecteur et autorise ou refuse une série de mesures lorsqu'un client l'interroge à distance.

On va maintenant décrire, à titre d'exemple non limitatif, un algorithme de recherche des routes mis en oeuvre dans le procédé de diffusion selon l'invention. Cet algorithme utilise la théorie des graphes pour modéliser le réseau et le parcourir.

Les fichiers de mesures sont lus et le réseau est modélisé avec les débits entre chaque noeud. Un paramètre du programme permet de définir lequel des noeuds est le serveur. L'algorithme parcourt le réseau de proche en proche à partir du serveur afin de trouver les routes qui arrivent aux lecteurs avec un débit au moins supérieur à un seuil de tolérance. Les routes qui passent par des chemins dont le débit est inférieur à ce seuil sont éliminées. Parmi toutes les routes qui permettent d'accéder à un noeud en garantissant que tous les sauts auront un débit supérieur au seuil, la première qui aura le minimum de sauts sera sélectionnée. Cette route est alors utilisée pour générer le script de mise à jour des routes du protocole OLSR.

L'algorithme de recherche des meilleures routes prend comme paramètres :

- l'adresse du serveur,
- le seuil tolérable du débit,
- les fichiers de mesure,
- le répertoire de destination des fichiers de configuration des routes statiques,
- la liste des machines éteintes ou inaccessibles.

Les débits sont calculés indépendamment dans les deux sens. L'algorithme de recherche calcule la moyenne des débits aller et retour entre deux noeuds pour déterminer les routes.

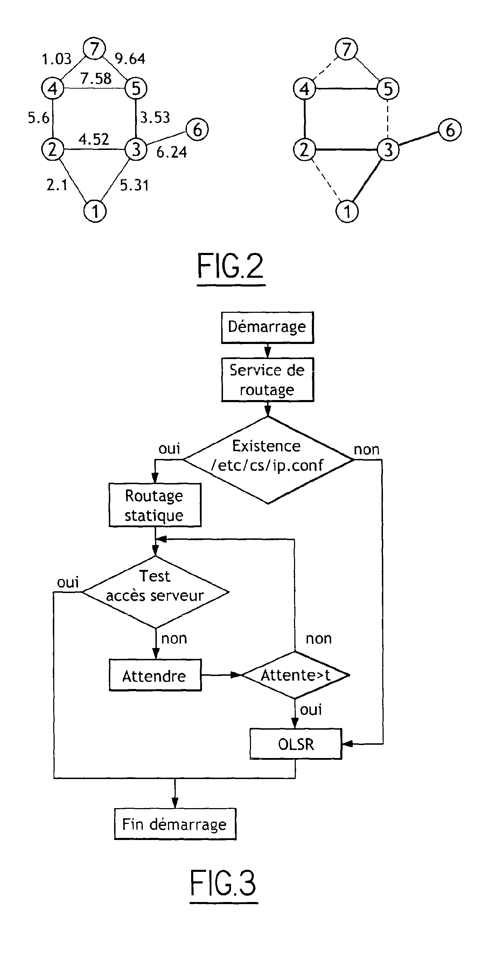

En référence à la figure 2 illustrant le comportement de l'algorithme sur un réseau à 7 noeuds, le schéma de gauche montre le réseau tel qu'il a été présenté au programme et le schéma de droite révèle en pointillé les chemins qui sont rejetés et en trait continu les chemins empruntés par les routes choisies par l'algorithme de recherche

Le script de routage est généré à partir des routes sélectionnées et des routes inverses. Ces scripts sont disponibles aux lecteurs dans un répertoire partagé sur le système NFS. Ils servent à définir les routes de la même manière que le protocole le faisait. Le comportement des lecteurs est le même qu'avec le protocole OLSR, mais les routes sont désormais optimisées et statiques.

L'algorithme cherche des routes qui partent du serveur pour arriver à tous les noeuds. Il déduit ensuite les routes réciproques des noeuds vers le serveur. Les noeuds ne sont pas prévus pour dialoguer entre eux en dehors du transfert de paquets lorsqu'ils appartiennent à l'une de ses routes. Toute tentative d'envois de messages d'un noeud vers un autre en dehors du serveur aura un comportement imprévisible : soit le noeud connaît une route car ce noeud fait partie d'une route qui relie un noeud quelconque au serveur et il arrivera à le joindre, soit le noeud renverra un message du type « no *route to host* » qui indique qu'aucun chemin n'est connu pour contacter ce noeud. Il est possible d'ajouter une route par défaut pour les paquets qui n'ont pas de destinations connues, mais cette modification ne garantira en aucun cas l'accessibilité de l'ensemble des noeuds partout sur le réseau et entraînera un facteur hasard sur les transmissions.

L'algorithme est prévu pour être lancé une fois à l'installation du réseau. Il permet de modifier les routes choisies par le protocole OLSR pour garantir le débit vers tous les noeuds du réseau. Contrairement au protocole OLSR, les routes ne seront jamais modifiées car les lecteurs sur le réseau sont prévus pour être statiques. Toutefois, l'algorithme peut être relancé pendant l'utilisation du réseau avec en paramètre une liste de lecteurs à éviter (qui sont par exemple éteints) afin de recalculer des routes statiques à partir des mesures initiales.

Dans le cas accidentel d'une modification du réseau entraînée par la perte d'un noeud, les routes statiques ne peuvent plus garantir que tous les noeuds soient accessibles. Un processus « daemon » sur le serveur se charge de vérifier l'intégrité du réseau et lance, le cas échéant, le protocole OLSR afin de le rétablir le temps de la résolution de la panne. Ce « daemon » peut tenir à jour une liste de lecteurs allumés et accessibles sur le réseau fin de relancer l'algorithme en cas de changement de la topologie.

On va maintenant décrire un exemple de mise en place du processus d'établissement des routes dans le procédé de diffusion selon l'invention. Le processus d'établissement des routes doit s'ordonnancer avec le reste des tâches de l'installation du réseau. Une planification adaptée permet de réduire le nombre de contraintes et de s'assurer de la validité des hypothèses.

Lors du premier démarrage des lecteurs du système de diffusion, le protocole OLSR garantit l'établissement d'un réseau IP et le chargement des partitions réseaux NFS.

Les scripts nécessaires aux mesures sont placés sur les disques mémoire (RAMDisk) de chaque lecteur, mais le programme de routage est résident sur le serveur. Il faut prévoir sur le système NFS deux emplacements pour recevoir les mesures effectuées par les lecteurs et pour rendre disponible les scripts de modification des routes. Ces deux répertoires sont utilisés par le programme de routage. Le programme de routage est démarrer manuellement en créant un fichier /**etc/cs/reset**. A tout moment, les mesures et le calcul des routes peuvent être réinitialisés.

Le protocole OLSR est nécessaire au démarrage pour accéder au système NFS mais doit être arrêté après le calcul des meilleures routes afin de l'empêcher de modifier les tables de routages.

Les lecteurs, après avoir effectué leurs mesures, surveillent un répertoire pour l'arrivée de leur script de routage. Dès que celui-ci est disponible, les lecteurs essayent de le récupérer puis arrêtent le protocole OLSR et lance le script de routage. Il faut définir avec attention la liste des programmes qui sont lancés sur le lecteur afin d'éviter un redémarrage peut-être superflu. Les lecteurs ne doivent pas s'arrêter à la première tentative infructueuse de réception car certain lecteurs sur leur route vers le serveur ne seront peut être plus disponibles pendant que le script redéfini les routes.

Le passage d'un mode de routage statique à un mode de routage dynamique avec le protocole OLSR et vice et versa peut se faire à tout moment de manière invisible grâce à l'interaction des scripts sur le serveur et les clients.

L'ensemble de l'installation peut s'effectuer automatiquement sans intervention extérieure en fonction de l'environnement estimé par les scripts de mesures. Les résultats des scripts de mesures et de l'algorithme sont disponibles sur le serveur afin de pouvoir les consulter et les interpréter pour les afficher sur l'écran du serveur ou d'un équipement informatique de maintenance relié au serveur.

On va maintenant décrire des phases du procédé de diffusion multimédia selon l'invention, du côté des lecteurs Clients du serveur, notamment la phase de démarrage.

Considérant qu'il existe deux modes de routages, il est envisageable d'effectuer un démarrage conditionnel comme l'illustre l'organigramme de la figure 3. En effet, si le lecteur client a déjà sa configuration statique, il pourrait tester son accès direct au serveur et éventuellement s'épargner l'utilisation du protocole OLSR.

Toutefois, si le lecteur démarre, le réseau peut être dans deux cas de figure: un premier démarrage ou un redémarrage (*reboot*) inopportun. Dans le cas d'un premier démarrage, les lecteurs n'ont pas encore de configuration statique et doivent passer en mode de mesure qui utilise le protocole OLSR. Dans le cas d'un redémarrage, le lecteur client, pendant un certain laps de temps, s'est retrouvé inaccessible. Donc le serveur a essayé de rétablir le réseau en protocole OLSR. Le réseau reste en protocole OLSR jusqu'à ce que les lecteurs absents redeviennent accessibles.

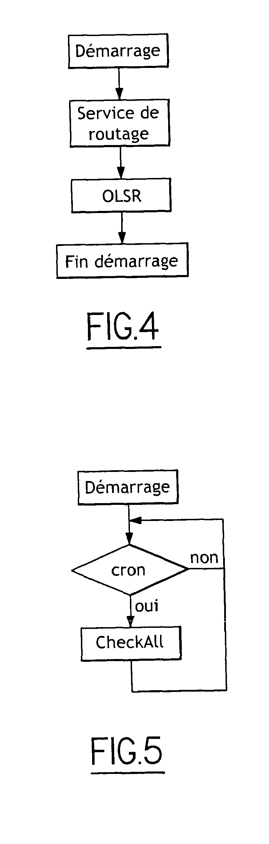

Donc dans le cas d'un premier démarrage comme dans le cas d'un redémarrage, le lecteur doit démarrer en protocole OLSR, comme schématisé sur l'organigramme de la figure 4.

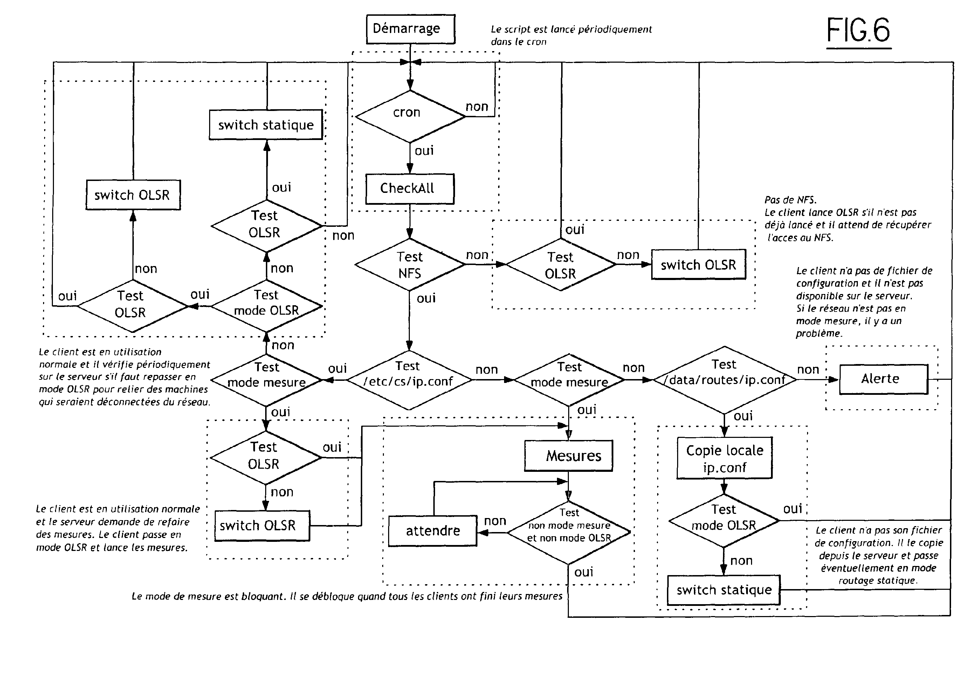

De plus, afin de réduire le temps de démarrage déjà long et d'assurer la cohérence du réseau, il peut être plus judicieux de faire un démarrage en protocole OLSR et de laisser une tâche périodique fréquente assurer la surveillance du mode de routage. L'organigramme de la figure 5 présente le fonctionnement global d'un lecteur client : après le démarrage, un script **CheckAll** est lancé périodiquement par un processus de lancement de tâches planifiées (cron).

Le serveur, puisqu'il fait partie du réseau et doit se comporter comme tous les noeuds, en plus d'avoir un certain nombre de tâches spécifiques, se comporte également comme un client. Ses actions ont été légèrement modifiées pour certains tests d'accès (puisque le serveur n'utilise pas de système NFS pour accéder à ses répertoires), mais la logique de fonctionnement est identique.

On va maintenant décrire le mode de vérification périodique du réseau mis en oeuvre dans le procédé de diffusion multimédia selon l'invention. Un script, dénommé **checkAll,** est prévu pour tester périodiquement, grâce à un tableau de planification (crontab), l'état du réseau en fonction des ordres du serveur. Les ordres, qui correspondent aux différents modes du réseau (mode de mesure, mode de routage statique ou mode de routage OLSR), sont lus dans le répertoire NFS partagé **/var/cs/etc.** L'organigramme fourni en figure 6 présente la suite de tests et d'actions du script **checkAll.**

Le premier test effectué par le script **checkAll** est la présence du système NFS. Parce que les ordres proviennent du serveur, la première tâche consiste à vérifier le bon accès aux ressources. Si les répertoires partagés en NFS ne sont pas présents sur le lecteur client, ce dernier passe en mode de routage OLSR et quitte le script **checkAll.** Puisque ce script est lancé périodiquement, le lecteur client est en attente de communication avec le serveur.

Dès que le système NFS est à nouveau accessible, il va d'abord vérifier s'il possède son fichier de configuration des routes. Si le client n'a pas le fichier de configuration des routes :

- soit il est en mode de mesure : alors dans ce cas il va effectuer des mesures sur ses voisins et transmettre ses résultats au serveur, puis attendre l'ordre de quitter le mode mesure et le mode OLSR.
- soit il n'est pas en mode de mesure et le fichier de configuration existe sur le serveur : dans ce cas, il recopie le fichier de configuration localement et passe éventuellement en mode statique.
- soit il n'est pas en mode de mesure et le fichier de configuration n'existe pas sur le serveur : dans ce cas il y a un problème car en dehors du mode de mesure qui crée les fichiers de configuration, ces derniers doivent toujours exister au moins sur le serveur. Deux raisons peuvent aboutir à ce cas : soit suivant une nouvelle installation et donc aucune mesure n'a encore été effectuée, soit suivant l'arrivée d'un nouveau lecteur client sur le réseau.

Si le lecteur client a son fichier de configuration des routes, il va d'abord vérifier que le serveur ne lui ordonne pas de retourner en mode de mesure. Il va enfin se retrouver dans le cas le plus courant d'utilisation : il a son fichier de configuration des routes et le réseau n'est pas en mode de mesure. Dans ce cas, il teste si le serveur demande de passer en mode de routage statique ou en mode de routage OLSR, et, en fonction du résultat et de son état actuel, il va passer dans un autre mode ou simplement quitter le script.

A titre d'exemple non limitatif, l'ensemble de fichiers de script clients peut contenir les fichiers suivants :

- **install.sh :** installe les scripts et les fichiers de configuration,

- **uolrd :** script de démarrage du protocole OLSR,
- **uolsrd.bin :** le programme OLSR,
- **stated :** le script de démarrage du processus « daemon » de mesure,
- **stated.bin :** le processus « daemon » de mesure,
- **mesures.sh :** le script de mesure,
- **checkall.sh :** le script de vérification périodique,
- **checknfs.sh :** le script de test du serveur NFS,
- **print.sh :** affichage conditionnel.
- **switch.sh :** le script de passage en mode OLSR ou en mode de routage statique.
- **cs.conf :** fichier de configuration des scripts.
- **cron :** fichier à concaténer avec le tableau de planification (crontab).
- **ask :** processus d'interrogation du processus « daemon » serveur à distance.

Le serveur a pour fonction de surveiller le réseau et de modifier son fonctionnement. C'est la seule machine du réseau qui donne des consignes que tous les lecteurs clients devront suivre. Le serveur est aussi un client du point de vue du réseau, puisqu'il doit passer en mode de routage statique, en mode de mesure ou en mode de routage OLSR comme tous les autres. Les scripts clients ont été modifiés de deux manières :

- l'accès au serveur est toujours valide car c'est un accès local,
- l'adresse IP du serveur est 10.0.0.1.

Avoir une adresse IP statique et non en fonction de l'adresse MAC entraîne un risque de doublon au niveau des adresses. Toutefois, la probabilité d'avoir une adresse MAC qui serait convertible en 10.0.0.1 en IP est très faible. De plus, fixer l'adresse du serveur permet d'avoir sur les supports de données (RamDisk) la même adresse quel que soit l'hôtel. Ainsi, une seule image du support de données (RamDisk) suffira pour toutes les installations. L'adresse IP du serveur doit être renseignée dans le fichier **fstab** nécessaire à la configuration des montages des répertoires NFS.
En plus des scripts clients, le serveur utilise les scripts et programmes suivants :

- un script de surveillance qui test l'accès avec tous les clients. Si un client n'est pas accessible, le réseau passe en mode de routage OLSR. Si tous les clients sont accessibles, le réseau passe en mode de routage statique. Après être passé en mode OLSR, le script fait la liste des lecteurs accessibles et reconfigure les tables de routage statiques avant de repasser en mode de routage statique ;
- un script de réinitialisation qui refait toutes les mesures sur le réseau et recherche les routes optimales. Le script est lancé si le fichier **reset** est présent dans le répertoire **/etc/cs/ ;**
- un processus qui écoute un port du lecteur et répond à certaines commandes afin de bloquer et autoriser des lecteurs clients à faire des mesures.

Comme le client et pour les mêmes raisons, le serveur démarre en mode de routage OLSR. Après le démarrage, les deux scripts de surveillance et de réinitialisation sont lancés périodiquement depuis le tableau de planification (crontab). C'est le script de réinitialisation qui lance l'algorithme de routage. Lors de l'installation, il faut créer le fichier **/etc/cs/reset** pour initialiser le réseau. Il est absolument indispensable de fournir le fichier **/var/cs/etc/ip.list** contenant la liste des adresses IP du réseau pour que l'installation fonctionne et que le réseau fonctionne correctement. Le script **convert.sh** permet de convertir une liste d'adresses MAC en liste d'adresses IP.
A titre d'exemple non limitatif, L'ensemble de fichiers serveur peut contenir les fichiers suivants :

- **install.sh :** installe les scripts et les fichiers de configuration,
- **uolrd :** script de démarrage du protocole OLSR,
- **uolsrd.bin :** le programme OLSR,
- **stated :** le script de démarrage du « daemon » de mesure,
- **stated.bin :** le « daemon » de mesure,
- **mesures.sh :** le script de mesure,
- **checkall.sh :** le script de vérification périodique,
- **checknfs.sh :** le script de test du serveur NFS modifié,
- **print.sh :** affichage conditionnel,
- **switch.sh :** le script de passage en mode OLSR ou en mode de routage statique,
- **cs.conf :** fichier de configuration des scripts,
- **cron :** fichier a concaténer avec le tableau de planification (crontab),
- **convert.sh :** conversion d'un fichier d'adresse MAC en fichier d'adresses IP,

- **crt :** le programme de recherche des routes,
- **checknetwork.sh :** le script de surveillance du réseau,
- **reset.sh :** le script de réinitialisation,
- **ask** : processus d'interrogation du « daemon » serveur à distance.

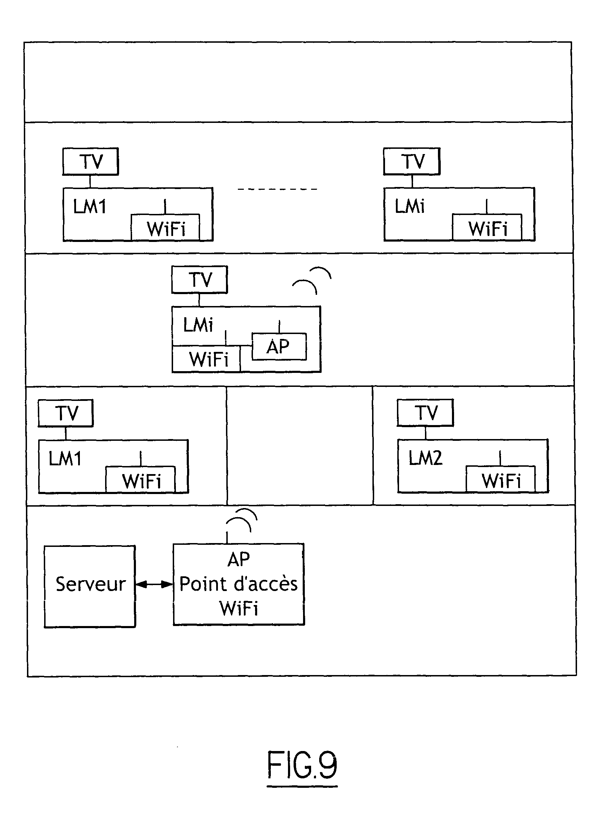

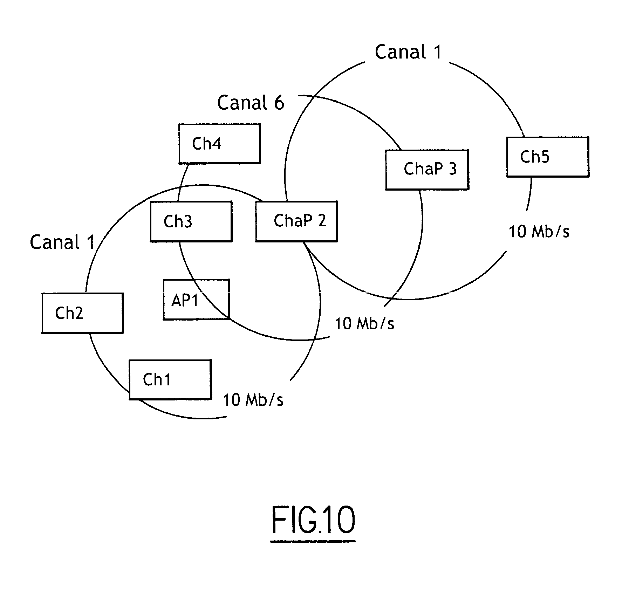

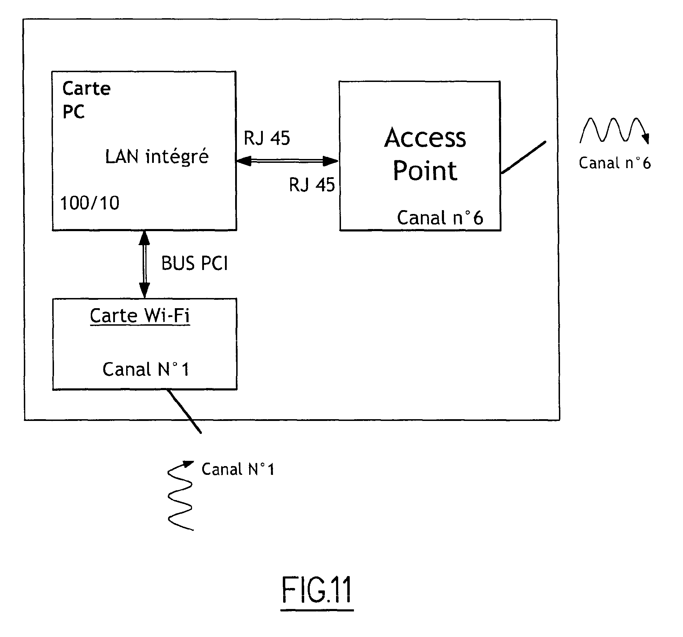

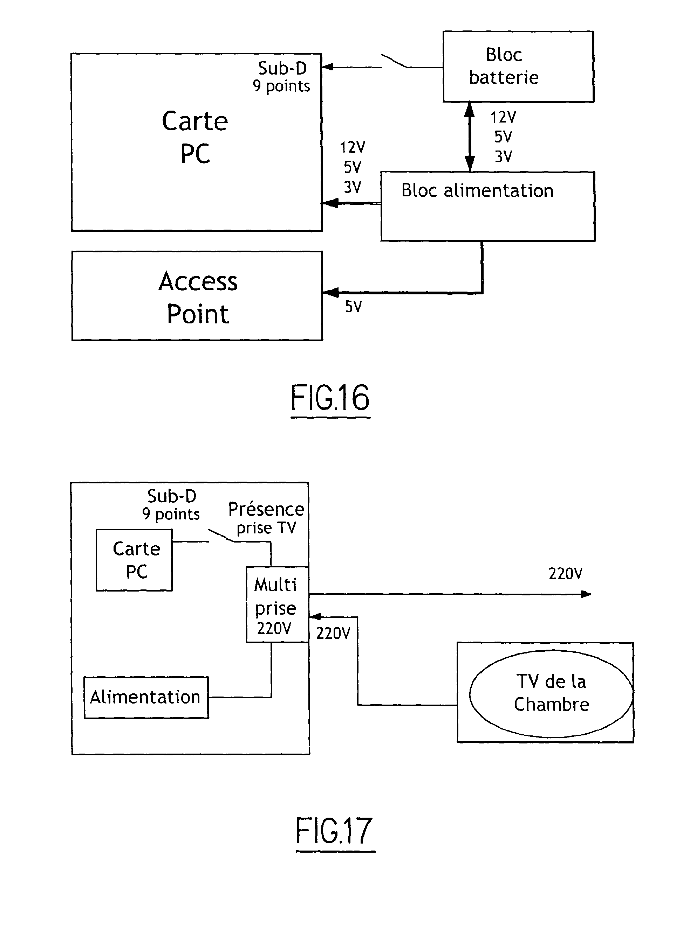

On va maintenant décrire, en référence aux figures 9 à 17, une seconde variante de réalisation d'un système de diffusion multimédia interactive selon l'invention, en même temps que le procédé d'optimisation mis en oeuvre pour l'implémentation de ce système.

Un système S de diffusion de contenu multimédia équipant un hôtel H comprend, en référence à la figure 9:

- un serveur SV de contenu multimédia (mail,film,guide ,..) dans chaque hôtel,
- un lecteur multimédia dans chaque chambre, communiquant avec le serveur de l'hôtel par liaison Wi-Fi et affichant le contenu multimédia sur la TV via la prise péritel.

Conformément à cette seconde variante de l'invention, certains lecteurs sont en outre équipés d'un relais Wi-Fi (Point d'Accès ou « Access Point » ) pour permettre de déployer le réseau de transmission sans fil.

Le lecteur multimédia, dont le logiciel résident peut implémenter un système d'exploitation Linux, est pourvu d'un clavier et une télécommande infrarouge IR se connectant sur la carte PC via un récepteur infrarouge associé.

Un dispositif de commutation vidéo, via le clavier et la télécommande, est prévu pour rendre actif la sortie vidéo afin de réactiver le poste de télévision, pour consulter le guide, ou de désactiver afin de retourner sur les chaînes de télévision.

Pour les lecteurs équipés de points d'accès, il est nécessaire de mettre en place un système de batterie afin de ne pas couper la fonction de pont Wi-Fi, notamment en cas de débranchement de la prise d'alimentation électrique. A cette fin, un système de détection de passage sur batterie peut être implanté et agencé pour émettre un signal de détection vers le serveur afin de prévenir le responsable de l'hôtel

Chaque lecteur multimédia comprend, à titre d'exemple non limitatif, les composants suivants :

- une carte PC au format mini ITX de faible consommation fonctionnant sans ventilateurs,
- une mémoire SDRAM, par exemple d'une capacité de 128Moctets,
- un disque flash,
- une carte Wi-Fi, par exemple au format PCI.,
- une alimentation,
- un récepteur infra rouge,
- un clavier infra rouge,
- une télécommande infra rouge,
- un système de commutation du signal vidéo,
- un Hub LAN

Les lecteurs chargés de la fonction de relais comprennent en outre :

- un dispositif de point d'accès
- Une batterie
- Un système de gestion de batterie

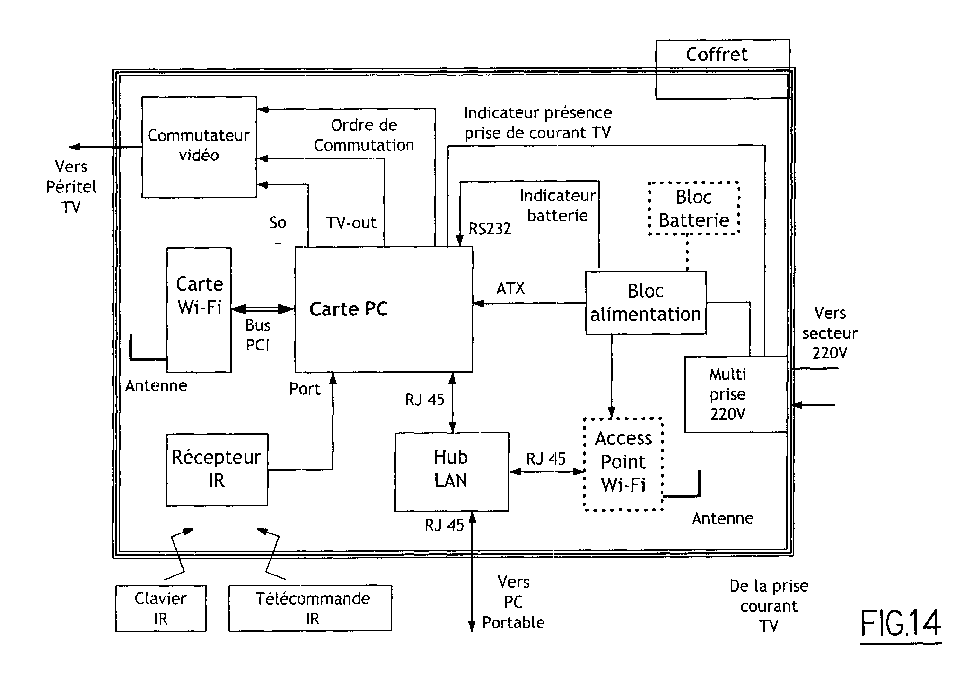

Le schéma fonctionnel de ce lecteur multimédia est donné en figure 14. On va maintenant décrire le fonctionnement du lecteur multimédia mis en oeuvre dans le système de selon l'invention.

Des données informatiques provenant du serveur informatique de l'hôtel arrivent sur la carte PCI Wi-Fi du lecteur multimédia, qui est connectée sur la carte PC. Ces données permettent de former des pages multimédias ainsi que des films et de les envoyer sur le téléviseur via la sortie TV-OUT de la carte PC .

Une carte son intégrée ayant une sortie jack envoie également la partie sonore vers la prise Péritel du poste de télévision. Le clavier infrarouge permet de naviguer dans le guide grâce à quelques touches ainsi que d'écrire des mails.

La télécommande utilisant les mêmes touches de navigation que le clavier (11 touches) permet de naviguer simplement dans le guide. Elle a notamment une touche marche/arrêt qui doit permettre de commuter le poste de télévision en mode AV (le guide s'affiche via la péritel) puis en mode TV (retour en fonctionnement normal TV avec les chaînes disponibles).

L'appui sur cette touche active un programme sous linux qui active une sortie sur le connecteur RS232, par général d'un signal une tension qui est envoyé sur le commutateur vidéo, qui suivant cet ordre, active la commutation lente dans la prise Péritel.

Un client d'une chambre d'un hôtel équipé d'un système de diffusion selon l'invention, et disposant d'un ordinateur portable peut se connecter à Internet via un connecteur réseau RJ45 relié via un boîtier duplicateur LAN à la carte réseau intégrée de la carte PC.

Certains des lecteurs multimédia sont équipés d'un point d'accès qui est un relais Wi-Fi permettant de prolonger le signal Wi-Fi quand ce signal est en limite de portée de la borne de la réception, et d'étendre ce signal à d'autres chambres de l'hôtel. Ce point d'accès est relié à la carte réseau intégrée de la carte PC (qui sert de pont) via un boîtier duplicateur LAN.

La carte PC, le point d'accès et le commutateur vidéo sont alimentés en 12 Volt, 5 Volt et 3Volt au moyen d'un bloc d'alimentation relié à une prise de courant 220V.

Pour les boîtiers lecteurs abritant un point d'accès, si la prise de courant est débranchée, l'alimentation est assurée par un bloc batterie, de sorte que le signal Wi-Fi puisse être relayé vers les autres chambres. Un signal indiquant que le bloc batterie a pris le relais est alors envoyé vers la RS232 par le bloc d'alimentation.

Afin de s'assurer contre le vol de télévision, chaque télévision associée au lecteur multimédia est alimenté en étant branché sur un bloc multiprise lui-même connecté au secteur. Un circuit de détection de présence de la prise de courant du poste de télévision envoie l'information sur une prise RS232 .Cette information peut alors être transmise, par un programme linux, vers le serveur informatique central de l'hôtel.

La carte PC est agencée et programmée pour assurer les fonctions suivantes :

- générer un affichage de télévision de qualité,
- faire tourner un navigateur Web et afficher des pages web,
- communiquer avec le serveur via le réseau sans fil,
- servir de pont entre un éventuel PC portable de client voulant se connecter à Internet,
- pouvoir décoder des films et sons compressés.

La carte PCI Wi-Fi est une carte réseau qui permet une connexion sans fil à un serveur. La qualité de réception dépend de la position de l'antenne des perturbations éventuelles et de la perméabilité du boîtier aux hautes fréquences (2.4 GHz et 5GHz)

Le point d'accès supplémentaire assure les fonctions suivantes :

- recevoir des données réseaux de la carte PC via un connecteur RJ45,
- renvoyer ces données via le réseau Wi-Fi sur un canal prédéfini.

Le guide multimédia qui fonctionne avec le système nécessite l'utilisation de 11 touches pour fonctionner. Cela est réalisable avec une télécommande. Cependant une fonction courrier électronique en option pour le client de l'hôtel nécessite l'utilisation d'un clavier d'ordinateur.

Le récepteur infrarouge pour la télécommande et le clavier est relié sur l'entrée clavier PS2 de la carte unité centrale. Plusieurs solutions de codage peuvent être envisagées, notamment une première solution dans laquelle la télécommande est codée comme le clavier et utilise le même récepteur, ce qui évite d'effectuer une conversion au format PS2, et une seconde solution dans laquelle la télécommande utilise un protocole différent impliquant l'utilisation d'un récepteur différent et une conversion infrarouge vers la carte PS2.

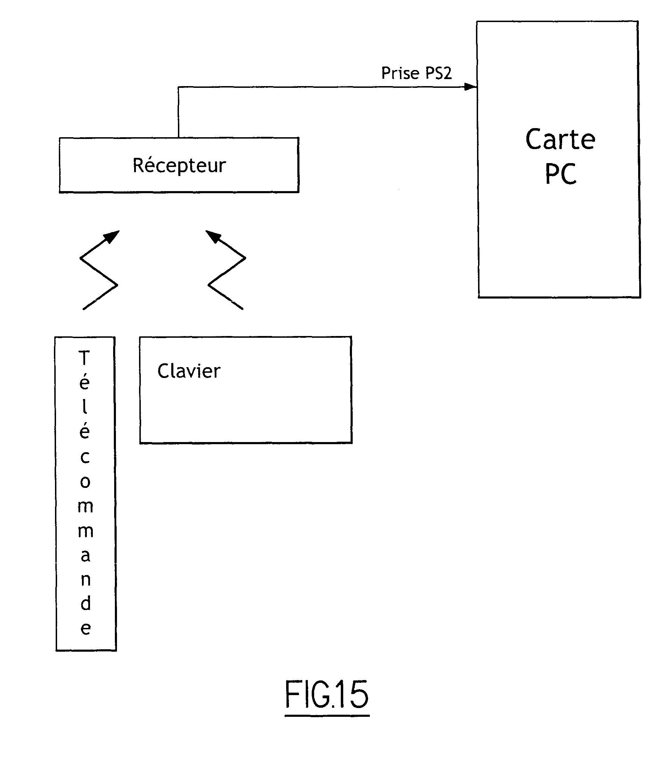

Le bloc batterie doit pouvoir prendre le relais de l'alimentation en cas de coupure de l'alimentation secteur par le même réseau connectique. Il doit indiquer s'il est activé ou non à la carte PC via un fil de la liaison série. Le schéma de principe du bloc batterie est donné en figure 15.

Les multiprises externes dans les hôtels étant interdites on utilise la prise secteur dédiée à la TV pour brancher le lecteur multimédia ; La TV étant connectée sur le lecteur multimédia. De plus avec un détecteur de présence de prise TV, on peut prévenir l'hôtelier que la TV est débranchée en cas de vol.

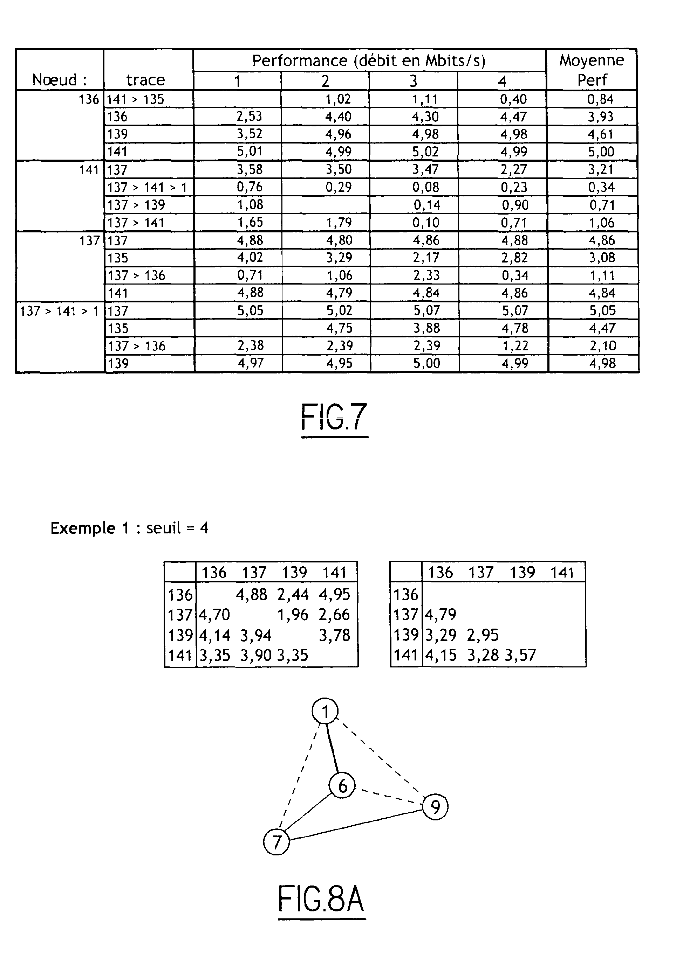

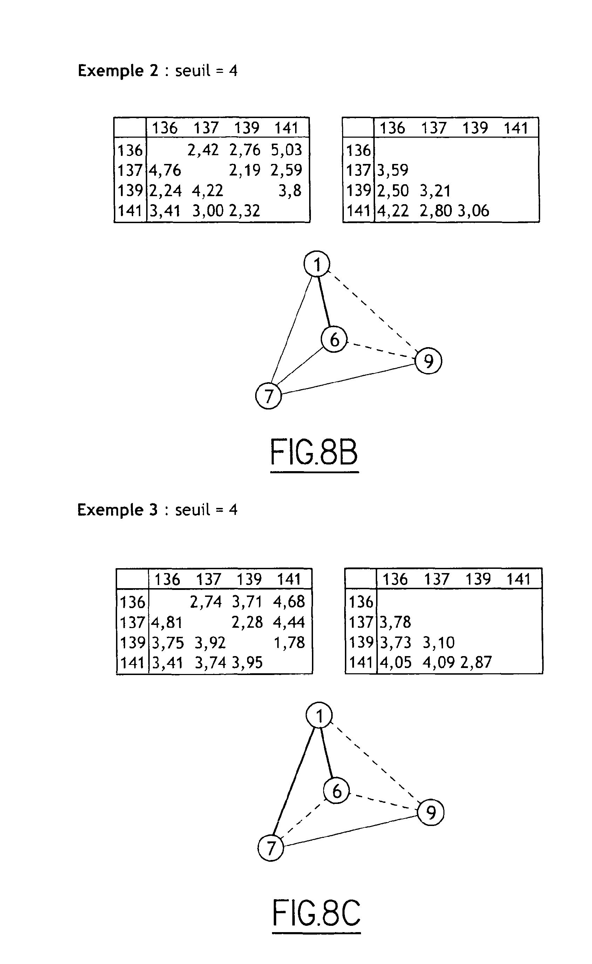

Le schéma de principe de la multiprise est donné en figure 8.

Le hub LAN constitue une multiprise réseau, et doit permettre de se connecter par la prise externe (portable) et par une prise interne (point d'accès). A titre d'exemple non limitatif, il doit permettre un débit de 100Mb/s

On va maintenant décrire le procédé d'optimisation selon l'invention, ainsi que des exemples d'utilisation de ce procédé.

On désigne ci-après par AP1, un pont d'accès au serveur par une liaison filaire Ethernet, et par Ch1, Ch2, Ch3, Ch4, Ch5, et Ch6, des boîtiers « client » installés chacun dans une chambre de l'hôtel. Chaque boîtier inclut une carte via et une carte Wi-Fi. On désigne par ChAP1 et ChAP2, des boîtiers « client » incluant en outre des points d'accès AP.

On considère une chambre, par exemple la chambre n°5, qui se trouve hors de portée du point d'accès principal AP1 pour un débit de 10Mb/s.

On place donc un lecteur multimédia incluant un point d'accès ChAP2 dans la chambre 2, de façon à former un pont filaire entre le récepteur Wi-Fi de ce lecteur et ce point d'accès. Le récepteur du lecteur multimédia reçoit sur un canal N1 mais le point d'accès ChAP2 ré émet sur un canal N2 distinct du canal N1, ce qui évite des interférences entre points d'accès.

L'objectif visé est que toutes les chambres soient dans une zone couvertes par un avec une bande passante minimum de 10 Mb/s

Une carte Wi-Fi PCI calée sur le canal N1 reçoit des données transmises sur ce canal. Cette carte transmet à la carte PC sur lequel tourne un pont logiciel qui envoie ses données vers la carte réseau classique intégrée LAN relié par fil avec le point d'accès qui émet les données qu'il reçoit sur un canal N6.

On va maintenant décrire un exemple de pont logiciel mis en oeuvre dans le système selon l'invention. Il s'agit de mettre en place un pont logiciel entre la carte réseau Wi-Fi et une carte LAN intégrée.

Ce pont logiciel traite les trames d'une carte réseau et les renvoie vers l'autre carte réseau, d'une façon indépendante du point d'accès et du type de Wi-Fi utilisé.

Pour viser un maintien du débit en fonction de la portée, il est nécessaire de prendre en compte le fait que le signal en fonction de la distance évolue en $1/D^2$. Cependant le débit n'est pas linéaire en fonction du type de codage. En effet des seuils de sensibilités sont tels que le type de codage change en fonction des seuils. La qualité du signal est en général proportionnel à la force du signal dans le cas ou le bruit est faible (-100Db) .

Un point d'accès en mode automatique commute automatiquement son type de codage, donc son débit utile, en fonction du niveau et de la qualité du signal reçu.

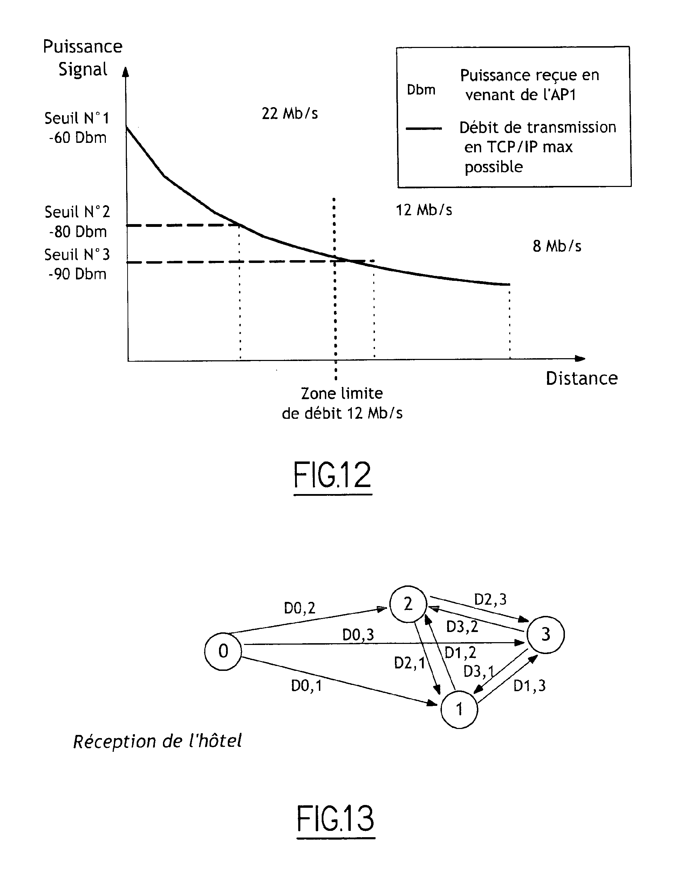

La courbe de débit en fonction du niveau du signal, donc de la qualité du signal, évolue typiquement de la façon illustrée en figure 12.

Si on place un point d'accès secondaire AP2 dans une zone limite de 12 Mb/s, son potentiel de débit suivra sensiblement la courbe décroissante continue. Ce point d'accès secondaire pourra, si il reçoit 12 Mb/s du point d'accès principal AP1, émettre à ce débit jusque dans sa zone limite, sans perte de débit par rapport à celui transmis.

Il s'agit donc de placer autant que possible des points d'accès AP en zone limite du débit que l'on veut maintenir. Cela est vrai si il n'y a pas d'interférences qui contribuent à abaisser le débit, ce qui incite à utiliser des canaux différents.

Un autre objet de la présente invention est de proposer un procédé de détermination de l'emplacement des points d'accès à l'intérieur d'une structure. Il s'agit ainsi de déterminer où on doit placer les points d'accès de manière optimale compte tenu de la contrainte de débit. Cette optimisation prend en compte les critères d'optimisation suivants.

Le premier critère d'optimisation est de pouvoir assurer un débit moyen, par exemple sur 30 secondes, d'au moins D Mb/s pour N clients simultanés.

Le second critère d'optimisation consiste à minimiser le nombre de points d'accès à utiliser afin de réduire les coûts d'installation.

On va maintenant décrire les étapes d'un exemple pratique d'exécution d'un procédé d'optimisation selon l'invention dans un hôtel.

On installe préalablement un lecteur multimédia « client » dans chaque chambre de cet hôtel ainsi qu'un lecteur multimédia dans le site central en substitution du point d'accès principal, ce lecteur multimédia ayant les mêmes caractéristiques d'émission-réception qu'un point d'accès.

On effectue une mesure de la qualité du lien et du débit entre les lecteurs multimédia « client ». A tour de rôle un lecteur « client » joue le rôle d'émetteur et on mesure le débit maximum ainsi que la qualité du signal avec tous les autres lecteurs « client ». Ainsi, pour un hôtel de 40 chambres, il s'agit de réaliser 40*41 mesures.

A partir de ces mesures, on détermine l'implantation optimale des points d'accès. Avec l'acquisition des mesures, il s'agit de connaître l'état de liaison de chaque lecteur multimédia client avec les autres. Cela conduit à développer une cartographie des débits et des signaux, comme l'illustre la figure 13.

A titre d'exemple non limitatif, dans le cas de trois chambres, on effectue tout d'abord une série de mesures M0 dans lesquelles le lecteur « client » installé à la réception de l'hôtel est émetteur (lecteur R). On réalise alors les mesures suivantes :

- mesure du débit maximum moyen (pendant 30 secondes) DR,1 entre le lecteur R et et le lecteur 1, du débit maximum moyen DR,2 entre le lecteur R et du lecteur 2 et du débit maximum moyen DR,3 entre le lecteur R et et le lecteur 3 ;
- mesure de qualité du signal QR,1 entre le lecteur R et lecteur 1, de qualité du signal QR,2 entre le lecteur R et et le lecteur 2 et qualité du signal QR,3 entre le lecteur R et le lecteur 3 ;
- mesure du niveau de signal SR,1 entre le lecteur R et le lecteur 2, du niveau de signal SR,2 entre le lecteur R et le lecteur 2, et du niveau de signal SR,3 entre le lecteur R et le lecteur 3 ;
- mesure du niveau de bruit BR,1 entre le lecteur R et le lecteur 1, du niveau de bruit BR,2 entre le lecteur R et le lecteur 2 et du niveau de bruit BR,3 entre le lecteur R et le lecteur 3.

On effectue ensuite une série de mesures M1, dans laquelle la chambre n°1 équipée du lecteur 1 est émettrice. Cette série de mesures comprend les mesures suivantes :

- mesure du débit maximum moyen (sur une durée de 30 secondes) D1,2 entre le lecteur 1 et le lecteur 2 et du débit maximum moyen D1,3 entre le lecteur 1 et le lecteur 3 ;
- mesure de qualité du signal Q1,2 entre le lecteur 1 et le lecteur 2 et de qualité du signal Q1,3 entre le lecteur 1 et le lecteur 3 ;
- mesure du niveau de signal S1,2 entre le lecteur 1 et le lecteur 2 et du niveau de signal S1,3 entre le lecteur 1 et le lecteur 3 ;
- mesure du niveau de bruit B1,2 entre le lecteur 1 et le lecteur 2 et du niveau de bruit B1,3 entre le lecteur 1 et le lecteur 3.

On effectue en suite une troisième série de mesures M2, dans laquelle la chambre n°2 est émettrice, comprenant les mesures suivantes :

- mesure du débit maximum moyen (sur une durée de 30 secondes) D2,1 entre le lecteur 2 et le lecteur 1, et du débit maximum D2,3 entre le lecteur 2 et le lecteur 3 ;
- mesure de qualité du signal Q2,1 entre le lecteur 2 et le lecteur 1 et de qualité du signal Q2,3 entre le lecteur 2 et le lecteur 3 ;
- mesure du niveau de signal S2,1 entre le lecteur 2 et le lecteur 1 et du niveau de signal S2,3 entre le lecteur 2 et le lecteur 3 ;
- mesure du niveau de bruit B2,1 entre le lecteur 2 et le lecteur 1 et du niveau de bruit B2,3 entre le lecteur 2 et le lecteur 3.

Suit une quatrième série de mesures M3, dans laquelle la chambre n°3 est émettrice, cette série comprenant les mesures suivantes :

- mesure du débit maximum moyenné sur une durée de 30 secondes, D3,1 entre le lecteur 3 et le lecteur 1 et du débit maximum moyen D3,2 entre le lecteur 3 et le lecteur 2 ;
- mesure de qualité du signal Q3,1 entre le lecteur 3 et le lecteur 1 et de qualité du signal Q3,2 entre le lecteur 3 et le lecteur 2 ;
- mesure du niveau de signal S3,1 entre le lecteur 3 et le lecteur 1 et du niveau de signal S3,2 entre le lecteur 3 et le lecteur 2 ;
- mesure du niveau de bruit B3,1 entre le lecteur 3 et le lecteur 1 et du niveau de bruit B3,2 entre le lecteur 3 et le lecteur 2. On obtient ainsi quatre matrices de résultat :

    **D :** Matrice des **D**ébits
    **Q :** Matrice de **Q**ualité du signal
    **S :** Matrice du niveau de **S**ignal
    **B :** Matrice du niveau de **B**ruit

Ainsi, est donnée ci-après la matrice des débits D pour n chambres :

| | | | | | | | | |
|---|---|---|---|---|---|---|---|---|
| D0,0 | D0,1 | D0,2 | | | | | | D0,n |
| D1,0 | D1,1 | D1,2 | | | | | | |
| D2,0 | D2,1 | D2,2 | | | | | | |
| D3,0 | D3,1 | D3,2 | | | | | | |
| | | | | | | | | |
| | | | | | | | | |
| | | | | | | | | |
| Dn-1,0 | Dn-1,1 | | | | | | Dn-1,n-1 | Dn-1,,n |
| Dn,0 | Dn,1 | Dn,2 | | | | | | Dn,n |

La matrice ci-dessus utilise les notations et conventions suivantes :

- la réception est notée 0 ;
- Di,j = Débit max du client i vers le client j ;
- Di,i ne correspond pas à une mesure et vaut -1 par convention ;

- si le contact ne peut se faire entre le lecteur i et le lecteur j, on note Di,j = 0 par convention.

La matrice des qualités de signaux Q peut être représentée de la façon suivante, pour n chambres, avec les conventions et notations suivantes :
- la réception est notée 0
- Qi,j = Qualité du signal émis par le lecteur client mesuré chez le lecteur client j
- Qi,i ne correspond pas à une mesure vaut -1 par convention
- si le contact ne peut se faire entre i et j on note Qi,j = 0 par convention

| Q0,0 | Q0,1 | Q0,2 | | | | | | Q0,n |
|---|---|---|---|---|---|---|---|---|
| Q1,0 | Q1,1 | Q1,2 | | | | | | |
| Q2,0 | Q2,1 | Q2,2 | | | | | | |
| Q3,0 | Q3,1 | Q3,2 | | | | | | |
| | | | | | | | | |
| | | | | | | | | |
| | | | | | | | | |
| Qn-1,0 | Qn-1,1 | | | | | | Qn-1,n-1 | Qn1,,n |
| Qn,0 | Qn,1 | Qn,2 | | | | | | Qn,n |

La matrice des niveaux de signaux S pour n chambres présente la structure suivante :

| S0,0 | S0,1 | S0,2 | | | | | | S0,n |
|---|---|---|---|---|---|---|---|---|
| S1,0 | S1,1 | S1,2 | | | | | | |
| S2,0 | S2,1 | S2,2 | | | | | | |
| S3,0 | S3,1 | S3,2 | | | | | | |
| | | | | | | | | |
| | | | | | | | | |
| | | | | | | | | |
| Sn-1,0 | Sn-1,1 | | | | | | Sn-1,n-1 | Sn-1,,n |
| Sn,0 | Sn,1 | Sn,2 | | | 1 | 1 | | Sn,n |

Pour cette matrice, les notations et conventions sont les suivantes :

- la réception est notée 0 ;
- Si,j = niveau de signal moyen en Dbm du signal émis par le lecteur i vers le lecteur client j et mesuré chez le lecteur j ;
- Si,i = ne correspond pas à une mesure et vaut -1 par convention ;
- si le contact ne peut se faire entre le lecteur i et le lecteur j, on note Si,j = 0 par convention.

La matrice des bruits B pour n chambres présent la structure suivante :

| B0,0 | B0,1 | B0,2 | | | | | | B0,n |
|---|---|---|---|---|---|---|---|---|
| B1,0 | B1,1 | B1,2 | | | | | | |
| B2,0 | B2,1 | B2,2 | | | | | | |
| B3,0 | B3,1 | B3,2 | | | | | | |
| | | | | | | | | |
| | | | | | | | | |

(suite)

|  |  |  |  |  |  |  |  |  |
|---|---|---|---|---|---|---|---|---|
| Bn-1,0 | Bn-1,1 |  |  |  |  |  | Bn-1,n-1 | Bn-1,,n |
| Bn,0 | Bn,1 | Bn,2 |  |  |  |  |  | Bn,n |

Pour cette matrice, sont employées les notations et conventions suivantes :

- la réception est notée 0 ;
- Bi,j = Bruit mesuré chez le lecteur client j sur le canal d'émission du lecteur client i ;
- Bi,i ne correspond pas à une mesure et vaut -1 par convention ;
- si le contact ne peut se faire entre i et j on note Bi,j = 0 par convention.

On va maintenant exposer l'algorithme d'acquisition mis en oeuvre, dans le procédé d'optimisation, pour la gestion des lecteurs clients hors de portée du point d'accès principal.

Lors de la phase de mesure, le point d'accès principal AP0 peut atteindre le lecteur client 2 pour lui demander de faire des mesures via le lecteur client 1 qu'il contacte directement.

Le passage en mode mesure d'un lecteur est effectué dans une séquence initiale de démarrage (boot). Vers la fin de cette séquence, le lecteur client écoute le réseau Wi-Fi et essaye de se connecter sur un point d'accès AP en mode Infrastructure. S'il n'en trouve pas, ce lecteur client passe alors en mode Ad Hoc sur un canal prédéfini.

En mode mesure, le lecteur client ne continue pas de s'installer en utilisant le réseau mais reste en mode Ad Hoc en utilisant une mémoire vive de 32Moctets.

Ce lecteur alors disponible pour répondre à des requêtes de mesure de débit et de signal avec d'autres clients également en mode Ad Hoc.

On utilisera pour cela des commandes en mode SSH pour déclencher des mesures, des outils de mesure dédiés, par exemple du type « wireless tool » (outil sans fil) pour mesurer l'état du réseau et changer de canal, et un outil tel que Netperf™ afin de mesurer le débit du réseau.

En mode Guide, si en fin de séquence de démarrage (boot), le lecteur client trouve un point d'accès AP, on effectue alors un montage NFS et le système télécharge ce dont il a besoin pour ouvrir le guide multimédia en plein écran sur le poste de télévision connecté à ce lecteur client.

Tous les lecteurs multimédia démarrent (boot) dès la mise sous tension, sur une mémoire vive, par exemple de type RAMdisk de 32Moctets.

A titre d'exemple non limitatif, un lecteur multimédia selon l'invention peut implémenter les logiciels suivants :

- un noyau Linux, incluant des pilotes (driver) Lan, son, vidéo et Wi-Fi ;
- un logiciel Client-Serveur ssh ou Client-Serveur sftp permettant de réaliser des transferts de type ftp sécurisé en mode ssh,
- des utilitaires logiciels « sans fil » (Wireless), qui dialoguent avec le pilote Wi-Fi afin de modifier la configuration et de collecter des données telles que « Qualité du signal », « Signal » et « Bruit », et
- un utilitaire de type Netperf™, permettant, en ligne de commande, de mesurer la bande passante entre deux machines, et dans les deux sens.

On va maintenant décrire un exemple d'allocation d'adresses IP à partir des adresses MAC : **allouIP** et **recoitIP.**

Il est à noter que les programmes lancés sur tous les lecteurs clients peuvent être identiques, ces lecteurs clients se différenciant seulement par l'adresse MAC de leurs cartes Wi-Fi respectives.

Lors du test de liaison il s'agit de pouvoir se connecter à un lecteur client i ayant une adresse MAC connue et de une allouer une adresse IP fournie par une table de correspondance du lecteur client 0.

Un programme **allouIP** est prévu pour se connecter, à partir d'une liste de couples IP - MAC, au client ayant une adresse MAC par Wi-Fi, et pour lui allouer son adresse (comme un serveur DHCP) via un client **recoitIP** en attente sur chaque client.

Une fois cette opération réalisée, un acquittement est envoyé au client ayant lancé ce programme **allouIP.**

Sur chaque lecteur client, est installé un programme de type Daemon, appelé **clientmesure,** qui scrute la présence du fichier /*root*/*mesure*/*scriptmesure.sh* . Ce programme effectue les opérations suivantes :

- scrutation de l'arrivée d'un fichier /*root*/*mesures*/*scriptmesure.sh,*
- lecture du fichier *scriptmesure* quand il arrive,

- extraction, dans l'entête repéré par #@, les adresses IP et les adresses MAC,
- lecture de la dernière adresse et comparaison de cette dernière adresse avec celle dudit programme,
- si cette adresse est la sienne, le programme lance l'exécution du script *scriptmesure.sh,*
- sinon, il lit la ligne d'adresse IP MAC suivant la sienne,
- s'il y a Y entre IP et MAC il transmet par protocole ftp le script à l'adresse IP,
- s'il y a un N entre IP et MAC, il lance le programme **aloueIP.**

Si l'exécution du programme **aloueIP** se passe bien, le programme met à jour la table IP MAC en fin du fichier *scriptmesure,* et transmet par ftp le *scriptmesure* à l'adresse IP.

Si l'exécution du programme **aloueIP** ne se passe pas bien, le programme renvoie du script vers l'adresse précédente, efface le fichier */root/mesures/scriptmesure.sh,* scrute l'arrivée d'un nouveau *scriptmesure.*

A titre d'exemple non limitatif, le script de mesure peut présenter une structure comprenant un entête,

L'entête est une liste d'adresse IP ou MAC dans les lignes de commentaires

```
#@192.168.1.4     Y     00:A0:C5:35:CE:6A
#@192.168.1.10    Y     00:A0:C5:35:CE:54
#@192.168.1.17    N     00:A0:C5:35:CE:1C
```

Cela signifie que l'on veut atteindre le lecteur client ayant l'adresse MAC 00:A0:C5:35:CE:1C et que, pour cela, on passe par le lecteur client 192.168.1.4 puis par le lecteur client 192.168.1.10.

Si par exemple le client 192.168.1.4 reçoit le script il lit la dernière adresse IP 192.168.1.17 ou MAC 00:A0:C5:35:CE:1C la compare avec la sienne , elle est différente de la sienne elle transmet donc le script par ftp à l'adresse suivant la sienne 192.168.1.10.

Le lecteur client 192.168.1.10. reçoit le script et lit la dernière adresse IP ou MAC. Comme cette adresse est différente de la sienne, le lecteur client va donc transmettre le script au lecteur client suivant son adresse, qui est le destinataire.

Cependant entre l'adresse IP et MAC il y a un N, ce qui signifie que le client n'a encore jamais été joint et ne connaît pas encore son adresse IP.

Ceci provoque l'exécution du programme **aloueIP** '00:A0:C5:35:CE:1C' '192.168.1.17 ' qui est reçu par le programme recoitIP du client ayant l'adresse MAC 00:A0:C5:35:CE:1C. Le N est transformé en Y et la table des couples IP MAC est mise à jour a la fin du script qui peut alors être transmis vers l'adresse 192.168.1.17

On va maintenant décrire un exemple de réalisation d'un script de mesure dans le lecteur client j, qui met en oeuvre une boucle sur le nombre total de lecteurs clients i, i étant compris entre 1 et N.

Ce script inclut une lecture de la ligne du lecteur client i sur la table IP MAC en fin de script de la ligne.

Si entre IP et MAC, il y a un Y, on demande au client j de passer sur le canal **k**.

Sinon, si entre IP et MAC on a N, on lance la procédure **aloueIP ;**

Si cette procédure réussit, on demande au client **j** de passer sur le canal k.

Si cette procédure échoue, on fait Q(j,i) ,B(j,i) ,S(j,i) , D(j,i) et d(j,i) =0 et on passe au lecteur client suivant.

Le lecteur client i est passé sur le canal k.

Un ordre de mesure des paramètres Q, S et B est envoyé au lecteur client j sur le canal k.

Les résultats Q, S et B sont retournés du lecteur client j vers le lecteur client i.

Le débit maximum D du lecteur i vers le lecteur j est mesuré sur le lecteur i avec l'outil logiciel Netperf.

Le débit maximum d du lecteur j vers le lecteur i est mesuré sur le lecteur i.

Il est demandé au lecteur j puis au lecteur i de revenir sur le canal commun, Retour de i sur le canal commun.

Les matrices Q(j,i) ,B(j,i) ,S(j,i) , D(j,i) et d(j,i) sont mises en forme dans le fichier de script.

La boucle est ensuite refermée. Les résultats sont retournés vers le lecteur client ayant dans l'entête l'adresse IP précédente a celle du lecteur i. Il s'agit de la liste des couples [adresse IP - adresse MAC].

S'il y a un Y entre l'adresse IP et MAC, c'est que le lecteur client a été configuré en IP. S'il y a un N, cela signifie que le lecteur client ne connaît pas son adresse IP.

A titre d'exemple non limitatif pour un ensemble de 9 clients, on peut obtenir la liste suivante :

```
#@192.168.1.2     Y     00:A0:C5:35:CE:6A
#@192.168.1.3     Y     00:A0:C5:35:CE:54
#@192.168.1.4     N     00:A0:C5:35:CE:1C
#@192.168.1.5     Y     00:A0:C5:35:CE:2A
#@192.168.1.6     Y     00:A0:C5:35:CE:54
```

(suite)

| | | |
|---|---|---|
| #@192.168.1.7 | Y | 00:A0:C5:35:CE:1C |
| #@192.168.1.8 | Y | 00:A0:C5:35:CE:6D |
| #@192.168.1.9 | Y | 00:A0:C5:35:CE:51 |
| #@192.168.1.10 | N | 00:A0:C5:35:CE:2C |

On va maintenant décrire un programme principal, appelé **mesures,** qui est installé sur le lecteur client 0 et qui est prévu pour effectuer les opérations suivantes :

- lecture de la table des adresses IP des clients en fonction des adresses MAC,
- inscription à la fin du script la table adresse IP adresse MAC,
- boucle sur le nombre de lecteurs clients,
- test du lien avec **alloulP,**

   - s'il n'y a pas de lien, on passe au lecteur client suivant,
   - si le lien est bon,

- mise à jour de la table IP MAC en fin du script **scriptmesure,**
- copie de l'adresse en entête du script **scriptmesure,**
- envoi du */root /mesures/scriptmesure.sh* par le protocole ftp à l'adresse IP,
- attente fichier résultat sur */root/mesures/client_i/resultat,*
- passage au client suivant
- fin de boucle sur le lecteur client
- fabrication d'une liste des lecteurs clients non atteints,
- recherche et classement dans l'ordre des chemins plus directs pour chaque lecteur client non atteint,
- écriture d'une table des chemins possibles classés,
- boucle sur les lecteurs clients non atteints,
- boucle sur les chemins possibles pour le lecteur client j non atteint,
- écriture du chemin en entête du *scriptmesure,*
- envoi du script */root/mesures/scriptmesure.sh* par protocole ftp à l'adresse adresse IP,
- attente du fichier résultat sur */root/mesures/client_i/resultat,*
- si fichier revient vide, boucle sur le chemin suivant,
- fin de la boucle chemin
- passage au lecteur client j + 1 non atteint suivant
- fin de boucle clients non atteint

On va maintenant décrire un exemple d'exploitation des mesures dans le cadre du procédé d'optimisation selon l'invention. Il est nécessaire de souligner que le besoin dimensionnant en débit correspond au débit requis pour la lecture d'un film.

Actuellement, la technologie Wi-Fi permet un débit maximum réel de 5.5 Mb/s avec le standard 802.11b, et un débit maximum réel de 22 Mb/s avec les standards 802.11g et 802.11a.

Dans l'exemple qui suit, on prend en compte le standard Wi-Fi 802.11b et un objectif de quatre lecteurs clients lisant simultanément un film codé au format divX, avec un débit requis d'environ 1 Mb/s. Le dispositif de lecture mis en place dans ces lecteurs clients permet de mettre en place une mémoire tampon d'environ 4 Moctets, procurant une autonomie d'environ 30 secondes. Il s'agit donc de pouvoir alimenter quatre clients simultanément quatre lecteurs clients avec pour chacun un besoin en débit moyen sur 30 secondes d'1 Mb/s.

Dans le cas d'une utilisation des standards Wi-Fi 802.11g et 802.11a, la contrainte de débit pourra alors porter sur 10 lecteurs clients simultanément.

On prend comme hypothèse de départ que, sur un temps t de quelques secondes, si la demande moyenne est la même (D Mb/s) sur N lecteurs clients simultanément, le réseau va répartir naturellement les temps de connexion à chaque lecteur client en fonction de la bande passante disponible avec chaque client, la charge demandée étant identique pour chaque lecteur client.

A titre d'exemple non limitatif, pour trois clients dont la bande passante est D1 D2 D3 , sur t secondes, on considère :

- un envoi au débit D1 vers le lecteur 1 pendant un temps t1,

- un envoi au débit D1 vers le lecteur 1 pendant un temps t2,
- un envoi au débit D1 vers le lecteur 1 pendant un temps t3.

La somme des temps t1+t2+t3 = t et on prend t=1s.

Si on note Dmax le débit maximum que peut fournir le système aux 3 clients on a :

$$Dmax*1 = D1*t1=D2*t2=D3*t3$$

Comme t1+t2+t3=1s, on obtient :

$$Dmax = 1/((1/D1)+(1/D2)+(1/D3))$$

Il s'agit du débit maximum identique moyen que peut fournir le système à trois clients.

Si on veut Dmax=1 pour quatre clients simultanés, il faut satisfaire la condition suivante, nécessaire pour un bon fonctionnement :

$$1/(1/D1)+(1/D2)+(1/D3)+(1/D4)) >= 1 \text{ Mb/s}$$

les débits D1 D2 D3 et D4 étant mesurés.

Si on considère maintenant 10 clients référencés de 1 à 10, il faut vérifier que pour tous les cas possibles de 4 clients simultanés, on ait un débit maximum supérieur ou égal à 1Mb/s :

$$D1,2,3,4=1/(1/D1)+(1/D2)+(1/D3)+(1/D4)) >= 1 \text{ Mb/s}$$

$$D1,2,3,5=1/(1/D1)+(1/D2)+(1/D3)+(1/D5)) >= 1 \text{ Mb/s}$$

$$D1,2,3,6=1/(1/D1)+(1/D2)+(1/D3)+(1/D6)) >= 1 \text{ Mb/s}$$

$$D1,2,3,7=1/(1/D1)+(1/D2)+(1/D3)+(1/D7)) >= 1 \text{ Mb/s}$$

$$D1,2,3,8=1/(1/D1)+(1/D2)+(1/D3)+(1/D8)) >= 1 \text{ Mb/s}$$

.............................................

.........................................

$$D7,8,9,10=1/(1/D7)+(1/D8)+(1/D9)+(1/D10)) >= 1 \text{ Mb/s}$$

Le débit maximum moyen que l'on peut fournir simultanément à 4 clients dans tous les cas de figure est min (Di,j,k,l).

On va maintenant décrire les paramètres, critères et contraintes pris en compte dans l'exploitation du procédé d'optimisation selon l'invention.

Les paramètres principaux sont :

- Ncl nombre de chambres d'hôtel équipées
- N nombre de clients pouvant regarder un film simultanément - D Débit en Mb/s moyen sur 15 s que l'on doit garantir pour la lecture d'un film

Le premier critère est la garantie du débit minimum pour regarder un film Un second critère est la réduction au maximum du nombre de points d'accès à implanter pour une question de coût. Un autre critère concerne le fait d'avoir un peu de marge pour être robuste face à une augmentation de bruit (perturbation sur la porteuse). Ces critères peuvent être traduits en critères de décision par rapport aux mesures effectuées.

L'algorithme mis en oeuvre dans le procédé d'optimisation selon l'invention est construit de la façon suivante.

On essaye tous les cas possibles avec un point d'accès, deux points d'accès , trois points d'accès,.....jusqu'à ce qu'il y ait une solution qui garantisse un débit garanti D avec N clients regardant un film simultanément, quelle que soit leur répartition dans les chambres d'hotel.

Pour un nombre donné de points d'accès, plusieurs solutions peuvent satisfaire cet objectif, étant entendu que les points d'accès peuvent être répartis de manières différentes. Dans ce cas, les critéres déterminant l'implantation retenue sont par ordre décroissant:

- le nombre de points d'accès rattaché directement au point d'accès principal de la reception est maximal ;
- la solution qui offre la meilleurs marge sur le Débit maximum Dmax que l'on peut fournir avec N lecteurs clients simultanés.

A titre d'exemple, une solution garantissant un débit de 2Mb/s dans 90% des cas est meilleure qu'une solution qui garantit 1.5 Mb/s dans 80% des cas.

Dans le cas ou il existe plusieures solutions pour un nombre minimum de points d'accès, ces solutions seront classées par ordre de préférence d'apres les critéres précités.Cela permet une souplesse lors de l'installation.

Bien sûr, l'invention n'est pas limitée aux exemples qui viennent d'être décrits et de nombreux aménagements peuvent être apportés à ces exemples sans sortir du cadre de l'invention. En particulier, l'invention n'est pas limité par l'utilisation d'un standard actuel de communication sans fil et pourra aisément être s'adapter aux standards Wi-Fi futurs.

## Revendications

1. Procédé de diffusion multimédia interactive dans un ensemble de locaux équipés chacun d'un lecteur multimédia, comprenant une diffusion de contenus multimédia à partir d'un serveur de diffusion vers les lecteurs multimédia via un réseau de communication sans fil comprenant un point d'accès principal relié au serveur de diffusion et des moyens de réception sans fil équipant chaque lecteur multimédia, **caractérisé en ce qu'**il comprend un processus initial pour rechercher des routes optimales entre le serveur de diffusion et les lecteurs multimédia, ces routes optimales étant ensuite utilisées en phase d'exploitation dans un mode de routage statique.

2. Procédé selon la revendication 1, **caractérisé en ce que** le processus initial de recherche de routes optimales comprend une modélisation du réseau par la théorie des graphes, dans laquelle chaque lecteur multimédia constitue un noeud « Client » d'un graphe dont les arêtes sont représentées par les débits entre les noeuds.

3. Procédé selon la revendication 2, **caractérisé en ce que** le processus de recherche de route comprend les étapes suivantes :

   4) un choix arbitraire d'une solution envisagée constituée d'un ensemble de routes qui n'ont pas encore été choisies,
   5) un test pour déterminer si le serveur de diffusion accède effectivement à tous les noeuds,
   6) si ce test est satisfaisant, une mémorisation de la solution choisie sous la forme d'un ensemble de tables de routage, et dans le cas contraire, un retour à la première étape.

4. Procédé selon l'une des revendications 2 à 4, **caractérisé en ce qu'**il comprend en outre un processus pour déterminer une solution étendue envisagée sur la base d'un nombre de lecteurs multimédia disponibles dans ladite solution (S) supérieur au nombre de lecteurs multimédia effectivement utilisés au sein d'un sous-réseau (R), la différence entre le nombre de lecteurs de la solution (S) et le nombre de lecteurs dudit sous-réseau (R) réseau représentant un nombre (Xcard) de lecteurs à exclure.

5. Procédé selon la revendication 5, **caractérisé en ce qu'**il comprend en outre une étape (4) pour déterminer un nombre maximal ($n_{max}$) de contenus multimédia, notamment de films, diffusables simultanément sur une partie du réseau dont un nombre (Xcard) de lecteurs multimédia sont exclus.

6. Procédé selon la revendication 6, **caractérisé en ce qu'**il comprend une étape pour déterminer parmi l'ensemble des sous-réseaux possibles, le sous-réseau (R) maximisant le nombre (n) de contenus multimédia diffusables simultanément.

7. Procédé selon l'une des revendications précédentes, **caractérisé en ce qu'**il comprend en outre un processus de gestion du débranchement d'un lecteur multimédia « client » initialement relié au réseau de communication sans fil, comprenant :

- une détection dudit lecteur multimédia débranché,
- une élaboration d'une nouvelle route, dite route de secours,
- une mise à jour des routes pour les lecteurs multimédia Clients du Serveur, et
- une propagation de scripts de mise à jour des routes vers lesdits Clients.

8. Procédé selon la revendication 8, **caractérisé en ce que** le processus de gestion de débranchement est implémenté sous la forme de scripts au nombre desquels un script de surveillance ayant pour fonctions de (i) déterminer la disparition de lecteurs multimédia sur le réseau et de (ii) déterminer la réapparition de lecteurs multimédia sur le réseau.

9. Procédé selon la revendication 9, **caractérisé en ce que** les scripts implémentant le processus de gestion de débranchement comprennent des scripts de suppression de routes erronées à la suite de l'apparition d'un lecteur Client Hors Service et des scripts de création de routes de secours.

10. Procédé selon l'une des revendications 8 à 10, **caractérisé en ce que** les lecteurs Clients sont pourvus d'un script de surveillance du Serveur.

11. Procédé selon la revendications 8 à 11, **caractérisé en ce que** les lecteurs Clients sont pourvus d'un script de recherche d'accès au Serveur.

12. Procédé selon l'une des revendications 8 à 12, **caractérisé en ce que** les lecteurs Clients sont pourvus d'un script de rapatriement de scripts de mise à jour des routes.

13. Procédé selon l'une des revendications précédentes, **caractérisé en ce qu'**il comprend en outre au moins un relais de communication entre un lecteur multimédia équipé d'un point d'accès secondaire et un sous-ensemble de lecteurs multimédia dont les moyens de réception sans fil sont sensiblement hors de portée du point d'accès principal.

14. Procédé selon la revendication 14, **caractérisé en ce qu'**il comprend en outre une détermination de l'emplacement optimal de points d'accès secondaires.

15. Procédé d'optimisation selon la revendication 15, **caractérisé en ce qu'**il implémente un premier critère d'optimisation consistant à assurer un débit moyenné sur une durée prédéterminée à un nombre prédéterminé de clients simultanés.

16. Procédé d'optimisation selon la revendication 16, **caractérisé en ce qu'**il intègre un second critère d'optimisation consistant à minimiser le nombre de points d'accès secondaires à installer.

17. Système de diffusion multimédia interactive comprenant :

- une pluralité de lecteurs multimédia disposés dans des locaux et comprenant des moyens de communication sans fil,
- un serveur de diffusion auxquels lesdits lecteurs multimédia sont reliés via un réseau sans fil,
- un point d'accès relié au serveur et prévu pour communiquer avec les lecteurs multimédia, et
- des moyens pour déterminer des routes optimales entre le serveur de diffusion et les lecteurs multimédia, pour acheminer des contenus multimédia vers chaque lecteur multimédia, ces routes optimales étant ensuite utilisées en phase d'exploitation dans un mode de routage statique.

18. Système selon la revendication 18, **caractérisé en ce qu'**il comprend en outre des moyens pour gérer le débranchement d'au moins un lecteur multimédia « Client » initialement relié au réseau de communication sans fil.

19. Système selon la revendication 19, **caractérisé en ce que** les moyens de gestion de débranchement comprennent :

- des moyens pour détecter un lecteur multimédia débranché,
- des moyens pour élaborer une nouvelle route, dite route de secours,
- des moyens pour mettre à jour des routes pour les lecteurs Clients du Serveur, et

- des moyens pour propager des scripts de mise à jour des routes vers lesdits Clients.

**20.** Lecteur multimédia prévu pour équiper un local au sein d'une structure pourvue d'un système de diffusion multimédia selon l'une des revendications 18 à 20, comprenant :

- des moyens de réception de contenus multimédia transmis depuis un Serveur de diffusion sur un réseau de communication sans fil, et
- des moyens de connexion avec un équipement pour visualiser les contenus multimédia reçus, et
- des moyens de contrôle et de traitement agencés pour rechercher un accès au Serveur.

**21.** Lecteur multimédia selon la revendication 21, **caractérisé en ce que** les moyens de contrôle et de traitement sont en outre agencés pour surveiller le Serveur.

**22.** Lecteur multimédia selon l'une des revendications 21 ou 22, **caractérisé en ce que** les moyens de contrôle et de traitement sont en outre agencés pour rapatrier des scripts de mise à jour de routes émis depuis le Serveur de diffusion.

**23.** Lecteur multimédia selon l'une des revendications 21 à 23, **caractérisé en ce qu'**il comprend en outre des moyens d'accès secondaire connectés aux moyens de réception sans fil et agencés pour relayer un signal de contenu multimédia reçu par les moyens de réception sans fil vers un sous-ensemble de lecteurs multimédia dont les moyens de réception sans fil sont sensiblement hors de portée du point d'accès principal associé au serveur de diffusion multimédia.

**24.** Lecteur multimédia selon l'une des revendications 21 à 24, **caractérisé ce qu'**il comprend en outre des moyens de stockage d'énergie électrique agencés pour maintenir une fonction de relais de communication sans fil en cas d'arrêt ou défaillance de l'alimentation secteur.

**25.** Lecteur multimédia selon la revendication 25, **caractérisé en ce qu'**il comprend en outre des moyens pour détecter une activation des moyens de stockage d'énergie et transmettre une information de détection à des moyens informatiques distants.

**26.** Lecteur multimédia selon l'une des revendications 21 à 26, **caractérisé en ce qu'**il est agencé pour communiquer avec un ordinateur portable.

**27.** Lecteur multimédia selon l'une des revendications 21 à 27, **caractérisé en ce qu'**il comprend en outre des moyens de prise électrique prévus pour l'alimentation électrique du poste de télévision.

FIG.1

EP 1 729 459 A1

## FIG.2

## FIG.3

```
┌─────────────┐
│  Démarrage  │
└──────┬──────┘
       │
       ▼
┌─────────────┐
│ Service de  │
│   routage   │
└──────┬──────┘
       │
       ▼
┌─────────────┐
│    OLSR     │
└──────┬──────┘
       │
       ▼
┌───────────────┐
│ Fin démarrage │
└───────────────┘
```

## FIG.4

```
┌─────────────┐
│  Démarrage  │
└──────┬──────┘
       │     ◄─────────────┐
       ▼                   │
      ╱╲                   │
     ╱  ╲     non          │
    ╱cron╲─────────────────┤
    ╲    ╱                 │
     ╲  ╱                  │
      ╲╱                   │
       │ oui               │
       ▼                   │
┌─────────────┐            │
│  CheckAll   │────────────┘
└─────────────┘
```

## FIG.5

# FIG.6

**Démarrage** — *Le script est lancé périodiquement dans le cron*

cron — non

oui

**CheckAll**

switch statique

switch OLSR

Test OLSR — non

oui

non

Test OLSR — oui

Test mode OLSR — oui

non

Test NFS — non → Test OLSR — non → switch OLSR

oui

*Pas de NFS.*
*Le client lance OLSR s'il n'est pas déjà lancé et il attend de récupérer l'accès au NFS.*

*Le client n'a pas de fichier de configuration et il n'est pas disponible sur le serveur. Si le réseau n'est pas en mode mesure, il y a un problème.*

Test mode mesure — oui

non

Test /etc/cs/ip.conf — non → Test mode mesure — non → Test /data/routes/ip.conf — non → **Alerte**

oui

oui

oui

*Le client est en utilisation normale et il vérifie périodiquement sur le serveur s'il faut repasser en mode OLSR pour relier des machines qui seraient déconnectées du réseau.*

Test OLSR — oui

non

switch OLSR

**Mesures**

attendre — non — Test non mode mesure et non mode OLSR

oui

**Copie locale ip.conf**

Test mode OLSR — oui

non

switch statique

*Le client est en utilisation normale et le serveur demande de refaire des mesures. Le client passe en mode OLSR et lance les mesures.*

*Le mode de mesure est bloquant. Il se débloque quand tous les clients ont fini leurs mesures*

*Le client n'a pas son fichier de configuration. Il le copie depuis le serveur et passe éventuellement en mode routage statique.*

| Nœud : | trace | Performance (débit en Mbits/s) | | | | Moyenne Perf |
|---|---|---|---|---|---|---|
| | | 1 | 2 | 3 | 4 | |
| 136 | 141 > 135 | | 1,02 | 1,11 | 0,40 | 0,84 |
| | 136 | 2,53 | 4,40 | 4,30 | 4,47 | 3,93 |
| | 139 | 3,52 | 4,96 | 4,98 | 4,98 | 4,61 |
| | 141 | 5,01 | 4,99 | 5,02 | 4,99 | 5,00 |
| 141 | 137 | 3,58 | 3,50 | 3,47 | 2,27 | 3,21 |
| | 137 > 141 > 1 | 0,76 | 0,29 | 0,08 | 0,23 | 0,34 |
| | 137 > 139 | 1,08 | | 0,14 | 0,90 | 0,71 |
| | 137 > 141 | 1,65 | 1,79 | 0,10 | 0,71 | 1,06 |
| 137 | 137 | 4,88 | 4,80 | 4,86 | 4,88 | 4,86 |
| | 135 | 4,02 | 3,29 | 2,17 | 2,82 | 3,08 |
| | 137 > 136 | 0,71 | 1,06 | 2,33 | 0,34 | 1,11 |
| | 141 | 4,88 | 4,79 | 4,84 | 4,86 | 4,84 |
| 137 > 141 > 1 | 137 | 5,05 | 5,02 | 5,07 | 5,07 | 5,05 |
| | 135 | | 4,75 | 3,88 | 4,78 | 4,47 |
| | 137 > 136 | 2,38 | 2,39 | 2,39 | 1,22 | 2,10 |
| | 139 | 4,97 | 4,95 | 5,00 | 4,99 | 4,98 |

## FIG.7

Exemple 1 : seuil = 4

| | 136 | 137 | 139 | 141 |
|---|---|---|---|---|
| 136 | | 4,88 | 2,44 | 4,95 |
| 137 | 4,70 | | 1,96 | 2,66 |
| 139 | 4,14 | 3,94 | | 3,78 |
| 141 | 3,35 | 3,90 | 3,35 | |

| | 136 | 137 | 139 | 141 |
|---|---|---|---|---|
| 136 | | | | |
| 137 | 4,79 | | | |
| 139 | 3,29 | 2,95 | | |
| 141 | 4,15 | 3,28 | 3,57 | |

## FIG.8A

**Exemple 2 : seuil = 4**

|     | 136  | 137  | 139  | 141  |
| --- | ---- | ---- | ---- | ---- |
| 136 |      | 2,42 | 2,76 | 5,03 |
| 137 | 4,76 |      | 2,19 | 2,59 |
| 139 | 2,24 | 4,22 |      | 3,8  |
| 141 | 3,41 | 3,00 | 2,32 |      |

|     | 136  | 137  | 139  | 141 |
| --- | ---- | ---- | ---- | --- |
| 136 |      |      |      |     |
| 137 | 3,59 |      |      |     |
| 139 | 2,50 | 3,21 |      |     |
| 141 | 4,22 | 2,80 | 3,06 |     |

FIG.8B

**Exemple 3 : seuil = 4**

|     | 136  | 137  | 139  | 141  |
| --- | ---- | ---- | ---- | ---- |
| 136 |      | 2,74 | 3,71 | 4,68 |
| 137 | 4,81 |      | 2,28 | 4,44 |
| 139 | 3,75 | 3,92 |      | 1,78 |
| 141 | 3,41 | 3,74 | 3,95 |      |

|     | 136  | 137  | 139  | 141 |
| --- | ---- | ---- | ---- | --- |
| 136 |      |      |      |     |
| 137 | 3,78 |      |      |     |
| 139 | 3,73 | 3,10 |      |     |
| 141 | 4,05 | 4,09 | 2,87 |     |

FIG.8C

FIG.9

FIG.10

| | | | |
|---|---|---|---|
| **Carte PC** | | | |
| LAN intégré | RJ 45 | **Access Point** | Canal n°6 |
| 100/10 | RJ 45 | Canal n°6 | |

BUS PCI

<u>Carte Wi-Fi</u>

Canal N°1

Canal N°1

# FIG.11

Puissance
Signal

Seuil N°1
-60 Dbm

22 Mb/s

| Dbm | Puissance reçue en venant de l'AP1 |
|---|---|
| —— | Débit de transmission en TCP/IP max possible |

Seuil N°2
-80 Dbm

12 Mb/s

Seuil N°3
-90 Dbm

8 Mb/s

Distance

Zone limite
de débit 12 Mb/s

## FIG.12

D0,2

2

D2,3

D0,3

D3,2

3

D2,1

D1,2

D3,1

D1,3

0

D0,1

1

*Réception de l'hôtel*

## FIG.13

FIG.14

Prise PS2

Carte
PC

Récepteur

Té
é
l
é
c
o
m
m
a
n
d
e

Clavier

FIG.15

Sub-D
9 points

Carte
PC

Bloc
batterie

12V
5V
3V

12V
5V
3V

Bloc alimentation

Access
Point

5V

FIG.16

Sub-D
9 points

Présence
prise TV

Carte
PC

Multi
prise
220V

220V

220V

Alimentation

TV de la
Chambre

FIG.17

Office européen
des brevets

Numéro de la demande

EP 05 29 1181

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X<br><br>Y | GB 2 402 302 A (ARTIMI LTD)<br>1 décembre 2004 (2004-12-01)<br>* page 9, ligne 1 - page 10, ligne 8 *<br>* page 15, ligne 9 - ligne 19 *<br>* figure 3a *<br>----- | 1,2,7-9,<br>13,17-19<br>3 | INV.<br>H04L12/56 |
| Y | US 2002/047775 A1 (DEL CASTILLO BYRON ET AL) 25 avril 2002 (2002-04-25)<br>* alinéa [0038] *<br>* alinéa [0060] - alinéa [0063] *<br>----- | 3 | |

**DOMAINES TECHNIQUES RECHERCHES (IPC)**

H04L

~~Le présent rapport a été établi pour toutes les revendications~~

| Lieu de la recherche | Date d'achèvement de la recherche | Examinateur |
|---|---|---|
| La Haye | 16 janvier 2006 | Behringer, L.V. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

**Office européen**

**des brevets**

## REVENDICATIONS DONNANT LIEU AU PAIEMENT DE TAXES

La présente demande de brevet européen comportait lors de son dépôt plus de dix revendications

☐ Une partie seulement des taxes de revendication ayant été acquittée dans les délais prescrits, le présent rapport de recherche européenne a été établi pour les dix premières revendications ainsi que pour celles pour lesquelles les taxes de revendication ont été acquittées, à savoir les revendication(s):

☐ Aucune taxe de revendication n'ayant été acquittée dans les délais prescrits, le présent rapport de recherche européenne a été établi pour les dix premières revendications.

## ABSENCE D'UNITE D'INVENTION

La division de la recherche estime que la présente demande de brevet européen ne satisfait pas à l'exigence relative à l'unité d'invention et concerne plusieurs inventions ou pluralités d'inventions, à savoir:

```
voir feuille supplémentaire B
```

☐ Toutes les nouvelles taxes de recherche ayant été acquittées dans les délais impartis, le présent rapport de recherche européenne a été établi pour toutes les revendications.

☐ Comme toutes les recherches portant sur les revendications qui s'y prêtaient ont pu être effectuées sans effort particulier justifiant une taxe additionnelle, la division de la recherche n'a sollicité le paiement d'aucune taxe de cette nature.

☐ Une partie seulement des nouvelles taxes de recherche ayant été acquittée dans les délais impartis, le présent rapport de recherche européenne a été établi pour les parties qui se rapportent aux inventions pour lesquelles les taxes de recherche ont été acquittées, à savoir les revendications:

☒ Aucune nouvelle taxe de recherche n'ayant été acquittée dans les délais impartis, le présent rapport de recherche européenne a été établi pour les parties de la demande de brevet européen qui se rapportent à l'invention mentionnée en premier lieu dans les revendications, à savoir les revendications:

```
1-19
```

**Office européen**

**des brevets**

**ABSENCE D'UNITÉ D'INVENTION
FEUILLE SUPPLÉMENTAIRE B**

Numéro de la demande

EP 05 29 1181

La division de la recherche estime que la présente demande de brevet européen ne satisfait pas à l'exigence relative à l'unité d'invention et concerne plusieurs inventions ou pluralités d'inventions, à savoir :

```
1. revendications: 1-19

      Procédé de diffusion multimédia interactive et système
      correspondant comprenant un processus initial pour
      rechercher des routes optimales et ces routes optimales
      étant utilisées dans un mode de routage statique.
                              ---

2. revendications: 20-27

      Lecteur multimédia comprenant des moyens de réception de
      contenus multimédia , des moyens de connexion avec un
      équipement pour visualiser les contenus multimédia reçus, et
      des moyens de contrôle et de traitement agencés pour
      rechercher un accès au serveur.
                              ---
```

EPO FORM P0402

## ANNEXE AU RAPPORT DE RECHERCHE EUROPEENNE
### RELATIF A LA DEMANDE DE BREVET EUROPEEN NO.

EP 05 29 1181

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-01-2006

| Document brevet cité au rapport de recherche | | Date de publication | Membre(s) de la famille de brevet(s) | | Date de publication |
|---|---|---|---|---|---|
| GB 2402302 | A | 01-12-2004 | GB | 2406480 A | 30-03-2005 |
| | | | GB | 2406481 A | 30-03-2005 |
| | | | HK | 1074550 A1 | 06-01-2006 |
| US 2002047775 | A1 | 25-04-2002 | US | 6275166 B1 | 14-08-2001 |

EPO FORM P0460

Pour tout renseignement concernant cette annexe : voir Journal Officiel de l'Office européen des brevets, No.12/82